# EUROPEAN PATENT APPLICATION

(11) **EP 4 836 195 A1**
(43) Date of publication of application: **04.11.2026**
(21) Application number: 24932490.6
(22) Date of filing: 16.04.2024
(51) Int. Cl.: H01R 13/02

(54) **IN-VEHICLE OPTOELECTRONIC MIXER AND METHOD FOR USING SAME**

(30) Priority: 27.03.2024 CN 202410357017
(71) Applicant: Accelink Technologies Co., Ltd., Wuhan, Hubei 430000 (CN)
(72) Inventor: TONG, Chao, Wuhan, Hubei 430000 (CN); WEN, Jiazhao, Wuhan, Hubei 430000 (CN); CHENG, Gangxi, Wuhan, Hubei 430000 (CN); ZHU, Xinhai, Wuhan, Hubei 430000 (CN); SONG, Beili, Wuhan, Hubei 430000 (CN); QUAN, Benqing, Wuhan, Hubei 430000 (CN); YE, Lin, Wuhan, Hubei 430000 (CN)
(74) Representative: Patentgruppen A/S
(86) International application number: PCT/CN2024/087913
(87) International publication number: WO 2025/200061

(57) **Abstract**

The present invention relates to the technical field of optical communications, and in particular, to an in-vehicle optoelectronic mixer and a method for using the same. The in-vehicle optoelectronic mixer comprises a male connector and a female connector. The male connector includes a first housing sleeve, a first power transmission assembly, a first ferrule assembly, and a pair of male electrodes respectively disposed on opposite sides of the first ferrule assembly. The first power transmission assembly includes a rotating housing and an electrical terminal pair fixed to the rotating housing. The electrical terminal pair includes a positive electrical terminal and a negative electrical terminal. The rear portions of the pair of male electrodes respectively abut the positive electrical terminal and the negative electrical terminal to achieve electrical connection. The first power transmission assembly of the male connector is configured to be rotatable. Rotating the rotating housing drives the first power transmission assembly to rotate integrally, thereby enabling convenient reversal of the connector's polarity without disassembly and facilitating rapid on/off operations of the connector.

## Description

### Cross-Reference to Related Applications

This application claims priority to:
(1) A Chinese Patent Application No. 202410357017.6, filed on March 27, 2024, entitled "IN-VEHICLE OPTOELECTRONIC MIXER AND METHOD FOR USING SAME", the disclosure of which is incorporated herein by reference in its entirety.

### Technical Field

The present invention relates to the technical field of optical communications, and particularly to an in-vehicle optoelectronic mixer and a method for using the same.

### Background

Optical fiber communication is a communication method that uses light waves as information carriers and optical fibers as transmission media. In the field of optical communication technologies, components such as connectors, optical modules, and adapters are commonly involved.

A connector is a passive optical component that realizes optical fiber connections. It functions to connect optical fibers to optical fibers, optical fibers to active devices, and optical fibers to equipment, as well as to enable detachable connections between optical fibers and other passive components, and between optical fibers and instruments. An optical module is a critical optical signal interface device in optical communication, featuring an optical interface and an electrical interface. The optical interface connects to an optical fiber for optical signal transmission, while the electrical interface connects to an external communication terminal device. An adapter is used for interconnecting two connectors. Especially in fiber-optic devices such as 5G base stations and FTTR devices, which require long-distance power supply while supporting high-bandwidth communication, a large number of optoelectronic cables are plugged and connected. Due to separate routing of optical and electrical lines, the number of connectors is large and divided into optical and electrical types, requiring one-to-one pairing. This results in complicated installation and maintenance operations and a high risk of incorrect connections.

On the other hand, in FTTH networks, traditional copper wires transmit network signals while supplying power to terminal nodes. As FTTH evolves into FTTR optical networks, in-vehicle terminals demand increasing bandwidth to support autonomous driving and artificial intelligence interactions. Traditional copper wires can no longer meet the bandwidth requirements of terminal nodes. The shift from copper to fiber for signal transmission at FTTR terminal nodes, with power supplied by cables, has become an inevitable trend. Existing solutions for connecting these composite cables use separate optical and electrical connectors: the optical connector mates with an optical adapter for optical signal coupling, and the electrical connector mates with an electrical adapter for electrical signal coupling. However, this requires two separate insertion/extraction operations to connect with an adapter. While optoelectronic hybrid connectors and adapters address this, some existing designs leave electrical terminals externally exposed, posing electric shock risks and safety hazards during practical use.

In applications requiring changes in transmission direction, equipment compatibility adjustments, or fault troubleshooting, optoelectronic hybrid connectors may need polarity reversal. Existing polarity reversal methods involve disassembling the connector to expose internal wires and optical components, then adjusting the positions of optoelectronic conversion modules or conductive probes. This process is complex, carries safety risks if mishandled, and requires professional operation.

Accordingly, there is an urgent need in the art to overcome the drawbacks of the prior art.

### Summary of the Invention

The present invention addresses the problems that existing optoelectronic hybrid connectors fail to meet integration and miniaturization requirements, and that existing polarity reversal methods are overly complex and pose safety hazards.

The present invention adopts the following technical solutions.

In a first aspect, the present invention provides an in-vehicle optoelectronic mixer, comprising a male connector 1 and a mating female connector 2.

The male connector 1 includes a first housing sleeve 10, a first power transmission assembly 11, a first ferrule assembly 12, and a pair of male electrodes 13 respectively disposed on opposite sides of the first ferrule assembly 12. The first power transmission assembly 11 is located at a rear portion of the first ferrule assembly 12. Both the first power transmission assembly 11 and the first ferrule assembly 12 are received within the first housing sleeve 10. The first power transmission assembly 11 includes a rotating housing 110 and an electrical terminal pair 111 fixed to the rotating housing 110. The electrical terminal pair 111 includes a positive electrical terminal and a negative electrical terminal. The rear portions of the pair of male electrodes 13 respectively abut the positive electrical terminal and the negative electrical terminal to achieve electrical connection. When reversal of the positive and negative electrical terminals is required, the rotating housing 110 is rotated 180 degrees to reverse their positions. The male connector 1 mates with the female connector 2 via the first housing sleeve 10.

According to the aforementioned first aspect, the present invention provides a method for using the in-vehicle optoelectronic mixer, applicable to the connector of the first aspect. The method comprises determining whether electrode reversal is needed based on the installation environment of an optoelectronic hybrid connector. If reversal is required, the rotating housing 110 is rotated from a first position to a second position to complete electrode reversal.

In a second aspect, the present invention further provides an adjustable optoelectronic mixer based on the first aspect, comprising a male connector 4 and a mating female connector 5.

The male connector 4 includes a first housing sleeve 40, a first power transmission assembly 41, and a first ferrule assembly 42. The first ferrule assembly 42 is disposed at the central axis of the first power transmission assembly 41, which is snap-fitted inside the first housing sleeve 40. A support rod 400 is disposed on an upper surface of the first housing sleeve 40. A locking tab 4002 is disposed at a bottom of the support rod 400. The first housing sleeve 40 defines locking grooves 401 corresponding to the locking tab 4002. The locking grooves 401 extend inward from the side surfaces of the first housing sleeve 40 and are symmetrically disposed on the upper and lower surfaces thereof.

According to the aforementioned second aspect, the present invention provides a method for using the adjustable optoelectronic mixer, applicable to the connector of the second aspect. The method comprises determining whether electrode reversal is needed based on the installation environment of an optoelectronic hybrid connector. If reversal is required, the support rod 400 is removed from the current locking groove 401 and installed in the locking groove 401 on the opposite side of the first housing sleeve 40 to complete electrode reversal.

In a third aspect, the present invention provides a novel optoelectronic mixer based on the first and second aspects, comprising a male connector 7 and a female connector 8.

The male connector 7 includes a first housing sleeve 70, a first ferrule assembly 71, male electrodes 72, and a first power transmission assembly 73. The male electrodes 72 are disposed on at least one sidewall of the first power transmission assembly 73 that mates with the first housing sleeve 70. The first ferrule assembly 71 is fixed at the central axis of the first power transmission assembly 73. The first housing sleeve 70 is sleeved over and snap-fitted with the first power transmission assembly 73. The end of each male electrode 72 configured to mate with a female electrode 82 is formed with a foolproof protrusion 720. The protrusion 720 extends beyond a corresponding through-hole in the first housing sleeve 70 by a predetermined distance, enabling both electrical connection with the female electrode 82 of the female connector 8 and foolproof mating between male and female connectors of different models.

According to the aforementioned third aspect, the present invention provides a method for using the novel optoelectronic mixer, applicable to the connector of the third aspect. The method comprises identifying a first position combination and matching quantity of the protrusions 720 on the male connector 7 and a second position combination and matching quantity of the grooves 800 on the female connector 8. The male connector 7 and female connector 8 are mated only if their combinations match.

Compared with the prior art, the present invention offers the following advantages:

The present invention provides an in-vehicle optoelectronic mixer that ingeniously integrates electrical connection structures into conventional all-optical connectors without increasing the volume of the optical interface. It fully leverages the inherent properties of the original structure to reserve space for electrical connections, preventing electrical leakage and maintaining structural strength after integration.
By configuring the first power transmission assembly 11 of the male connector as rotatable, rotating the rotating housing 110 drives the entire first power transmission assembly 11 to rotate. A 180-degree rotation reverses the connector's polarity, while a 90-degree rotation disconnects power. This enables convenient polarity reversal and rapid on/off operations without disassembly.

### Brief Description of the Drawings

To clearly illustrate the technical solutions of the embodiments of the present invention, the accompanying drawings to be used are briefly described below. It is apparent that the following drawings merely depict several embodiments of the invention, and those skilled in the art can derive other drawings therefrom without creative efforts.
FIG. 1 is a schematic diagram of the overall structure of an in-vehicle optoelectronic mixer according to an embodiment of the present invention;
FIG. 2 is an exploded view of the in-vehicle optoelectronic mixer according to an embodiment of the present invention;
FIG. 3 is a schematic diagram of an electrical terminal pair of the in-vehicle optoelectronic mixer according to an embodiment of the present invention;
FIG. 4 is a schematic diagram of one abutment configuration between a male electrode and an electrical terminal pair of the in-vehicle optoelectronic mixer according to an embodiment of the present invention;
FIG. 5 is a schematic diagram of the electrical terminal pair of FIG. 4 after inversion according to an embodiment of the present invention;
FIG. 6 is a schematic diagram of an improved abutment configuration between a male electrode and an electrical terminal pair of the in-vehicle optoelectronic mixer according to an embodiment of the present invention;
FIG. 7 is a schematic diagram of the electrical terminal pair of FIG. 6 after polarity reversal according to an embodiment of the present invention;
FIG. 8 is a schematic diagram of a locking groove of the in-vehicle optoelectronic mixer according to an embodiment of the present invention;
FIG. 9 is a schematic diagram of electrode markings of the in-vehicle optoelectronic mixer according to an embodiment of the present invention;
FIG. 10 is a schematic diagram of a protrusion of the in-vehicle optoelectronic mixer according to an embodiment of the present invention;
FIG. 11 is a schematic diagram of a first through slot of the in-vehicle optoelectronic mixer according to an embodiment of the present invention;
FIG. 12 is a schematic diagram of a second notch of the in-vehicle optoelectronic mixer according to an embodiment of the present invention;
FIG. 13 is a schematic diagram of a protrusion disposed in the second notch of the in-vehicle optoelectronic mixer according to an embodiment of the present invention;
FIG. 14 is a schematic diagram of a second power transmission assembly of the in-vehicle optoelectronic mixer according to an embodiment of the present invention;
FIG. 15 is a schematic diagram of a first receiving groove of the in-vehicle optoelectronic mixer according to an embodiment of the present invention;
FIG. 16 is a schematic diagram of an interlock structure of a second housing sleeve of the in-vehicle optoelectronic mixer according to an embodiment of the present invention;
FIG. 17 is a schematic diagram of an interlock structure of a first housing sleeve of the in-vehicle optoelectronic mixer according to an embodiment of the present invention;
FIG. 18 is a cross-sectional view of the male and female connectors of the in-vehicle optoelectronic mixer in an interlocked state according to an embodiment of the present invention;
FIG. 19 is a schematic diagram of a first cutout of the in-vehicle optoelectronic mixer according to an embodiment of the present invention;
FIG. 20 is a schematic diagram of dimensions of a support rod of the in-vehicle optoelectronic mixer according to an embodiment of the present invention;
FIG. 21 is a schematic diagram of clearance spaces of a first locking opening and a first locking head of the in-vehicle optoelectronic mixer according to an embodiment of the present invention;
FIG. 22 is a schematic diagram of a support rod fixedly disposed on a first housing sleeve of the in-vehicle optoelectronic mixer according to an embodiment of the present invention;
FIG. 23 is a schematic diagram of a second receiving groove of the in-vehicle optoelectronic mixer according to an embodiment of the present invention;
FIG. 24 is a schematic diagram of a locking tab of the in-vehicle optoelectronic mixer according to an embodiment of the present invention;
FIG. 25 is a schematic diagram of the overall structure of an adjustable optoelectronic mixer according to an embodiment of the present invention;
FIG. 26 is a schematic diagram of a support rod integrally formed with a first housing sleeve of the adjustable optoelectronic mixer according to an embodiment of the present invention;
FIG. 27 is a schematic diagram of a support rod of the adjustable optoelectronic mixer according to an embodiment of the present invention;
FIG. 28 is a schematic diagram of a locking groove of the adjustable optoelectronic mixer according to an embodiment of the present invention;
FIG. 29 is a schematic diagram of a second housing sleeve and a locking groove of the adjustable optoelectronic mixer according to an embodiment of the present invention;
FIG. 30 is a schematic diagram of a locking tab of the adjustable optoelectronic mixer having one locking tab according to an embodiment of the present invention;
FIG. 31 is a schematic diagram of dimensions of a locking tab and a locking groove of the adjustable optoelectronic mixer according to an embodiment of the present invention;
FIG. 32 is a schematic diagram of a locking tab of the adjustable optoelectronic mixer having two locking tabs according to an embodiment of the present invention;
FIG. 33 is a schematic diagram of a locking tab of the adjustable optoelectronic mixer with an elliptical through-hole according to an embodiment of the present invention;
FIG. 34 is a schematic diagram of a locking tab of the adjustable optoelectronic mixer with a rectangular through-hole according to an embodiment of the present invention;
FIG. 35 is a schematic diagram of a first through slot of the adjustable optoelectronic mixer according to an embodiment of the present invention;
FIG. 36 is a schematic diagram of a first housing sleeve of the adjustable optoelectronic mixer according to an embodiment of the present invention;
FIG. 37 is a schematic diagram of a second locking head of the adjustable optoelectronic mixer according to an embodiment of the present invention;
FIG. 38 is a schematic diagram of a first power transmission assembly of the adjustable optoelectronic mixer according to an embodiment of the present invention;
FIG. 39a is a schematic diagram of a second power transmission assembly of the adjustable optoelectronic mixer according to an embodiment of the present invention;
FIG. 39b is a schematic diagram of a rectangular notch of a first power transmission assembly of the adjustable optoelectronic mixer according to an embodiment of the present invention;
FIG. 40 is a schematic diagram of electrode markings of the adjustable optoelectronic mixer according to an embodiment of the present invention;
FIG. 41 is a schematic diagram of an interlock structure of the male and female connectors of the adjustable optoelectronic mixer according to an embodiment of the present invention;
FIG. 42 is a schematic diagram of an interlock structure of a first housing sleeve of the adjustable optoelectronic mixer according to an embodiment of the present invention;
FIG. 43 is a schematic diagram of a first locking opening and a first locking head of the adjustable optoelectronic mixer in a locked state according to an embodiment of the present invention;
FIG. 44 is a schematic diagram of a first cutout of the adjustable optoelectronic mixer according to an embodiment of the present invention;
FIG. 45 is a schematic diagram of a support rod of the adjustable optoelectronic mixer according to an embodiment of the present invention;
FIG. 46 is a cross-sectional view of a first cutout and a support rod of the adjustable optoelectronic mixer in a mated state according to an embodiment of the present invention;
FIG. 47 is a schematic diagram of a spring of the adjustable optoelectronic mixer according to an embodiment of the present invention;
FIG. 48 is a cross-sectional view of the spring of FIG. 47 according to an embodiment of the present invention;
FIG. 49 is a schematic diagram of the overall structure of a novel optoelectronic mixer according to an embodiment of the present invention;
FIG. 50 is a schematic diagram of the internal structure of the novel optoelectronic mixer according to an embodiment of the present invention;
FIG. 51 is a schematic diagram of an abutment configuration between a male electrode and a first electrical terminal of the novel optoelectronic mixer according to an embodiment of the present invention;
FIG. 52 is a schematic diagram of a housing of a first power transmission assembly of the novel optoelectronic mixer according to an embodiment of the present invention;
FIG. 53 is a schematic diagram of a first housing sleeve of the novel optoelectronic mixer according to an embodiment of the present invention;
FIG. 54 is a schematic diagram of a groove of the novel optoelectronic mixer according to an embodiment of the present invention;
FIG. 55 is a schematic diagram of a protrusion of the novel optoelectronic mixer according to an embodiment of the present invention;
FIG. 56 is a schematic diagram of a second electrical terminal of the novel optoelectronic mixer according to an embodiment of the present invention;
FIG. 57 is a schematic diagram of a first receiving groove of the novel optoelectronic mixer according to an embodiment of the present invention;
FIG. 57a is a cross-sectional view of the novel optoelectronic mixer at the angle of FIG. 58 according to an embodiment of the present invention;
FIG. 58 is a schematic diagram of a second power transmission assembly of the novel optoelectronic mixer according to an embodiment of the present invention;
FIG. 59 is a schematic diagram of a positioning member of the novel optoelectronic mixer according to an embodiment of the present invention;
FIG. 59a is a schematic diagram of the positioning member and a second electrical terminal of the novel optoelectronic mixer in a mated state according to an embodiment of the present invention;
FIG. 60 is a schematic diagram of a coupling unit of the novel optoelectronic mixer according to an embodiment of the present invention;
FIG. 61 is a schematic diagram of a first ferrule assembly and a second ferrule assembly of the novel optoelectronic mixer coupled via the coupling unit according to an embodiment of the present invention;
FIG. 62 is a schematic diagram of a second notch of the novel optoelectronic mixer according to an embodiment of the present invention;
FIG. 63 is a schematic diagram of a support rod of the novel optoelectronic mixer according to an embodiment of the present invention;
FIG. 64 is a schematic diagram of a second locking opening and a second locking head of the novel optoelectronic mixer in a locked state according to an embodiment of the present invention;
FIG. 65 is a schematic diagram of a first cutout of the novel optoelectronic mixer according to an embodiment of the present invention;
FIG. 66 is a schematic diagram of a width of a support rod of the novel optoelectronic mixer according to an embodiment of the present invention;
FIG. 67 is a schematic diagram of a support rod and a first locking opening of the novel optoelectronic mixer in a mated state according to an embodiment of the present invention;
FIG. 68a is a schematic diagram of a snap spring of the novel optoelectronic mixer according to an embodiment of the present invention;
FIG. 68b is a schematic diagram of a second housing sleeve of the novel optoelectronic mixer snapped to a panel according to an embodiment of the present invention;
FIG. 69 is a schematic diagram of a support rod integrally formed with a first housing sleeve of the novel optoelectronic mixer according to an embodiment of the present invention;
FIG. 70 is a schematic diagram of a second receiving groove of the novel optoelectronic mixer according to an embodiment of the present invention;
FIG. 71 is a schematic diagram of a locking tab of the novel optoelectronic mixer according to an embodiment of the present invention.

Reference numerals corresponding to Embodiment 1 are listed as follows: 1: Male connector; 10: First housing sleeve; 100: Support rod; 1000: First locking opening; 1001: Pressing portion; 1002: Elongated concave groove; 101: Second receiving groove; 1003: Locking tab; 102: Second notch; 103: Locking groove; 11: First power transmission assembly; 110: Rotating housing; 1100: Locking protrusion; 1101: Electrode marking; 111: Electrode terminal pair; 12: First ferrule assembly; 120: Rotating portion; 13: Male electrode; 130: Protrusion; 2: Female connector; 20: Second housing sleeve; 200: First through slot; 201: First receiving groove; 202: First notch; 2020: First locking head; 203: Limiting portion; 204: First cutout; 205: Fence structure; 21: Second ferrule assembly; 22: Female electrode; 23: Second power transmission assembly; 230: Second electrical terminal; 231: Columnar body; 232: Positioning member; 2321: Rectangular groove; 2322: Through window; 3: Conductive wire.

Reference numerals corresponding to Embodiment 2 are listed as follows:
4: Male connector; 40: First housing sleeve; 400: Support rod; 4000: First locking opening; 4001: Pressing portion; 4002: Locking tab; 4003: Elongated concave groove; 4004: Through hole; 401: Locking groove; 402: Ferrule guide groove; 403: Second notch; 404: Second locking opening; 41: First power transmission assembly; 410: Male electrode; 4100: Protrusion; 411: Cylindrical base; 4110: Square column base; 4111: Second locking head; 4112: Electrode marking; 4113: First limit groove; 42: First ferrule assembly; 420: Limiting block; 43: Spring; 5: Female connector; 50: Second housing sleeve; 500: First notch; 5000: First locking head; 501: First through slot; 502: First cutout; 503: First Limiting portion; 504: Fence structure; 51: Second power transmission assembly; 510: Female electrode; 511: Columnar body; 512: Positioning member; 5120: Rectangular groove; 5121: Through window; 52: Second ferrule assembly; 6: Conductive wire.

Reference numerals corresponding to Embodiment 3 are listed as follows:
7: Male connector; 70: First housing sleeve; 700: First locking opening; 701: Support rod; 7010: Second locking opening; 7011: Pressing portion; 7012: Elongated concave groove; 7013: Locking tab; 7014: Oval through hole; 702: Second receiving groove; 703: First cutout; 71: First ferrule assembly; 72: Male electrode; 720: Protrusion; 73: First power transmission assembly; 730: First electrical terminal; 731: First Limiting portion; 7310: First locking head; 732: Cylindrical base; 733: Square column base; 8: Female connector; 80: Second housing sleeve; 800: Recess; 801: First receiving groove; 802: First through slot; 803: Second notch; 8030: Second locking head; 804: First cutout; 805: Second Limiting portion; 806: Coupling unit; 807: Fence structure; 808: Annular boss; 809: Snap spring piece; 81: Second ferrule assembly; 82: Female electrode; 83: Second power transmission assembly; 830: Second electrical terminal; 831: Columnar body; 832: Positioning member; 8320: Rectangular groove; 8321: Through window; 9: Conductive wire.

### Detailed Description of Embodiments

To make the objects, technical solutions, and advantages of the present invention clearer, the present invention is described in further detail below with reference to the accompanying drawings and embodiments. It should be understood that the specific embodiments described herein are merely illustrative of the invention and are not intended to limit it.

In the description of the present invention, terms such as "inner," "outer," "longitudinal," "transverse," "upper," "lower," "top," and "bottom" refer to orientations or positional relationships based on the accompanying drawings, which are merely for convenience of description and do not indicate or imply that the referenced devices or elements must have a specific orientation or be constructed and operated in a specific orientation. Thus, they should not be construed as limiting the present invention.

Terms such as "first" and "second" are used in the present invention for descriptive purposes only and do not indicate or imply relative importance or the number of indicated technical features. Thus, features defined as "first" or "second" may explicitly or implicitly include one or more such features. In the description of the present invention, "a plurality of" means two or more unless otherwise specified.

Unless explicitly stated or limited otherwise, terms such as "connected" in the present invention should be interpreted broadly. For example, "connected" may mean fixedly connected, detachably connected, or integrally connected; it may also mean directly connected or indirectly connected via an intermediate medium. Additionally, "coupled" refers to electrical connection for signal transmission.

Furthermore, technical features of the various embodiments of the present invention described below may be combined with each other if they do not conflict.

### Embodiment 1

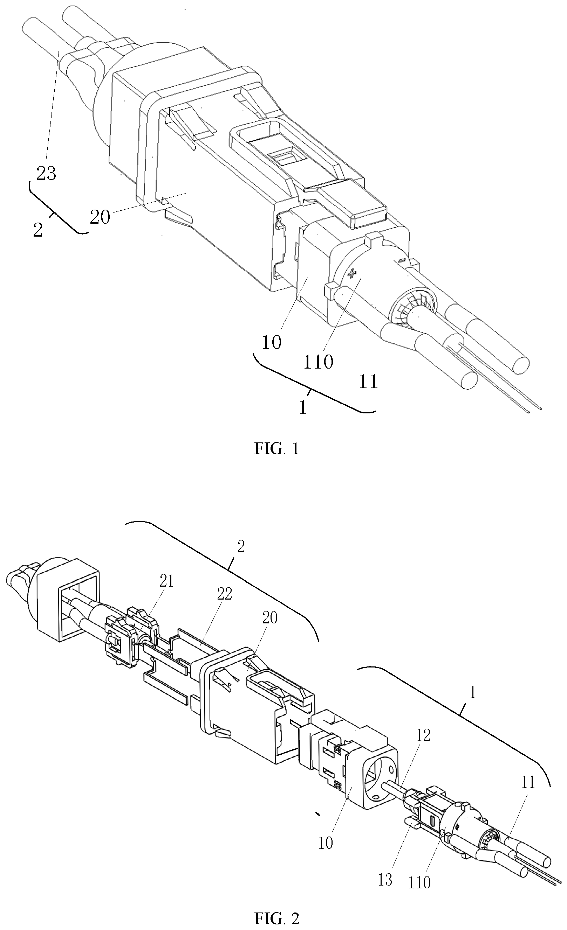

This embodiment provides an in-vehicle optoelectronic mixer, as shown in FIGS. 1-9, comprising a male connector 1 and a female connector 2.

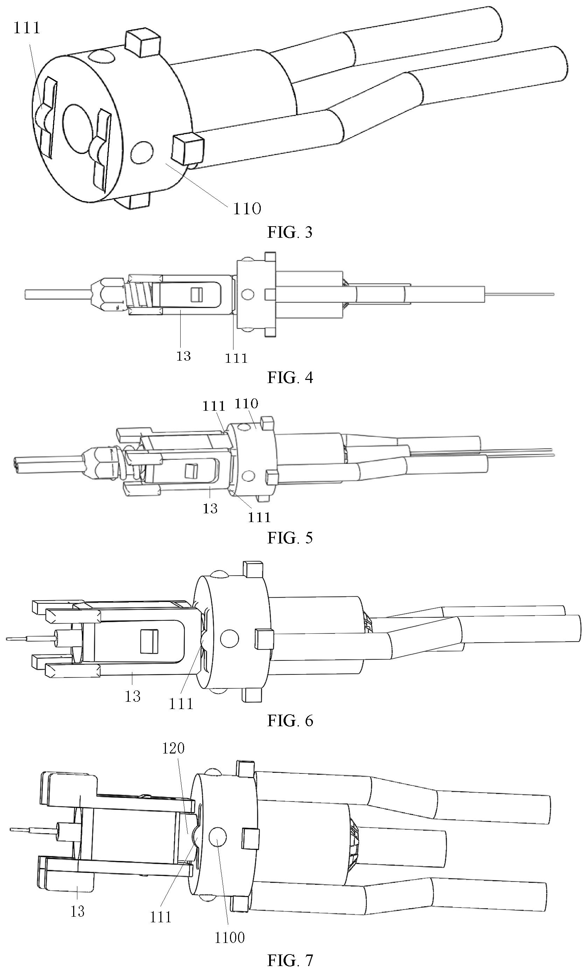

As shown in FIGS. 1 and 2, the male connector 1 includes a first housing sleeve 10, a first power transmission assembly 11, a first ferrule assembly 12, and a pair of male electrodes 13 respectively disposed on opposite sides of the first ferrule assembly 12. The first power transmission assembly 11 is located at a rear portion of the first ferrule assembly 12, and both are received within the first housing sleeve 10. The first power transmission assembly 11 includes a rotating housing 110 and an electrical terminal pair 111 fixed to the rotating housing 110. The electrical terminal pair 111 includes a positive electrical terminal and a negative electrical terminal. The rear portions of the pair of male electrodes 13 respectively abut the positive and negative electrical terminals to achieve electrical connection. When polarity reversal is required, the rotating housing 110 is rotated 180 degrees to reverse the positions of the positive and negative electrical terminals. Rotating the housing 90 degrees disconnects the electrical terminal pair 111 from the male electrodes 13, cutting power. FIG. 4 illustrates the abutment configuration between the electrode terminal pair 111 and the male electrode 13. Semi-circular protrusions are disposed at two ends of the electrode terminal pair 111. The male electrode 13 abuts against both protrusions simultaneously to establish electrical connection. However, this arrangement presents a defect. As shown in FIG. 5, when the rotating housing 110 rotates by 90 degrees, the male electrode 13 will make contact with only one protrusion of the positive terminal and the negative terminal, which may cause a short circuit in the connector. To address the above issue, one embodiment adopts an alternative electrical connection configuration as depicted in FIG. 6. A semi-circular protrusion is arranged at the middle section of the electrode terminal pair 111, and the contact surface of the male electrode 13 that abuts the electrode terminal pair 111 is flat. Electrical connection is achieved when the male electrode 13 contacts the protrusion of the electrode terminal pair 111. After the above optimization, as shown in FIG. 7, the electrode terminal pair 111 disengages from the male electrode 13 when the rotating housing 110 rotates by 90 degrees, cutting off power to the connector. This design meets the expected performance requirements of preset application scenarios.

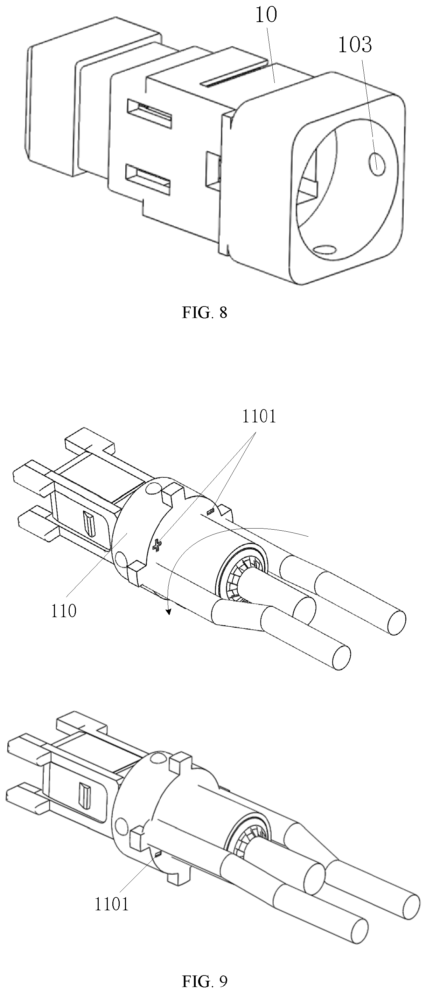

To ensure smooth rotation of the rotating housing 110 and prevent it from being jammed by the electrode terminal pairs 111 on opposite sides of the rotating housing 110, a short cylindrical rotating portion 120 is formed on the part of the housing of the first ferrule assembly 12 that abuts the rotating housing 110. The diameter of the rotating portion 120 is slightly smaller than the gap between the positive terminal and the negative terminal. In one embodiment, the rotating housing 110 is secured to the first housing sleeve 10 via the locking structure shown in FIG. 7 and FIG. 8. A plurality of locking protrusions 1100 are arranged on the outer surface of the rotating housing 110, and a plurality of locking grooves 103 matching the locking protrusions 1100 are disposed inside the first housing sleeve 10. In this embodiment, the locking protrusions 1100 and locking grooves 103 are both circular. This configuration enables reliable engagement for positioning, while allowing the rotating housing 110 to turn freely without full locking. Four sets of locking protrusions 1100 and locking grooves 103 are provided, such that each incremental rotation of the rotating housing 110 corresponds to a 90-degree angular displacement.

To reverse the positions of the positive and negative electrical terminals, rotate the rotating housing (110) by 180 degrees as illustrated in FIG. 9, thereby completing electrode reversal. An electrode marking 1101 is provided on the surface of the rotating housing 110 corresponding to the electrode terminal pair 111 to distinguish the positive terminal from the negative terminal. In one embodiment, the electrode marking 1101 is arranged at the bottom of the rotating housing 110. A plus sign (+) is marked at the position corresponding to the positive electrical terminal, and a minus sign (-) is marked at the position corresponding to the negative electrical terminal.

As shown in FIGS. 1 and 2, the female connector 2 includes a second housing sleeve 20, a second ferrule assembly 21, and female electrodes 22 respectively disposed on two sides of the second ferrule assembly 21. The male and female connectors are fixedly connected via interlock structures on their housing sleeves. The first ferrule assembly 12 and the second ferrule assembly 21 abut for optical signal transmission, and the male electrode 22 and the female electrode 13 abut for electrical connection.

In a first aspect, the present invention provides an in-vehicle optoelectronic mixer. An electrical connection structure is ingeniously integrated into a conventional pure optoelectronic connector. The overall size of the optical interface does not need to be increased during implementation. The inherent characteristics of the original structure are fully utilized, and spaces suitable for arranging the electrical connection structure are extracted therefrom. This design effectively prevents electric leakage and maintains the structural strength of the integrated optoelectronic connector.

In a second aspect, the first power transmission assembly 11 of the male connector 1 is configured to be rotatable. Rotating the rotating housing 110 drives the entire first power transmission assembly 11 to rotate. A 180° rotation reverses the polarity of the connector, while a 90° rotation cuts off power to the connector. This realizes convenient polarity reversal and rapid power switching without disassembling the connector.

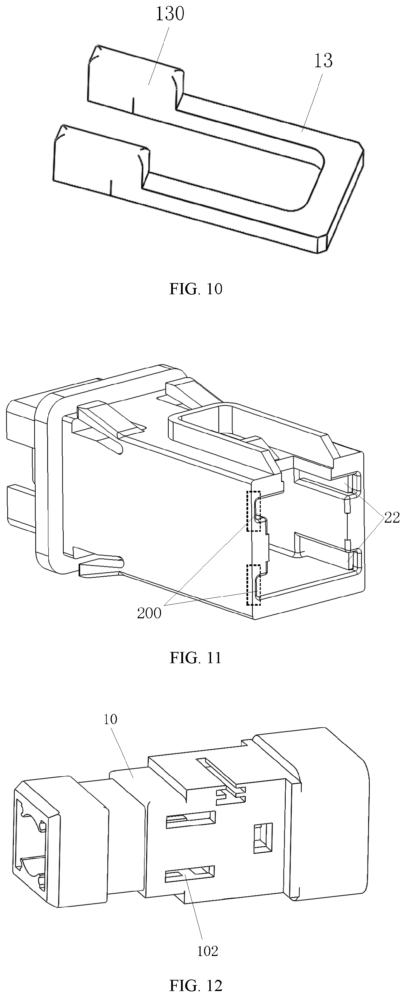

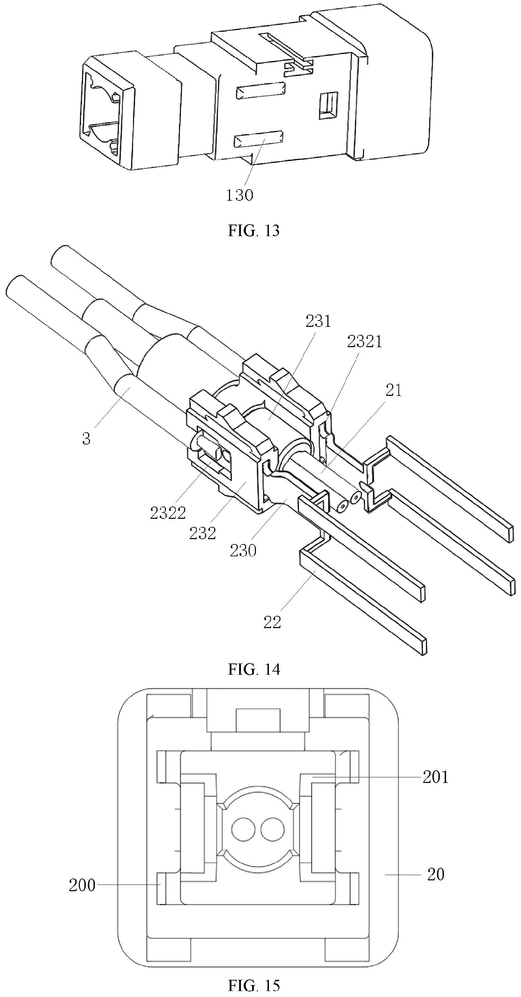

To enable multiple specifications for the male connector 1 and the female connector 2, and ensure that only matched specifications can be mated while preventing connection between mismatched ones, the present invention adopts the structure shown in FIG. 10 and FIG. 11. An end of the male electrode 13 for mating with the female electrode 22 is formed into a foolproof protrusion 130. An inner wall of the second housing sleeve 20 is provided with a first through slot 200 corresponding to the protrusion 130. The female electrode 22 is embedded at the bottom of the first through slot 200, and the protrusion 130 abuts the female electrode 22 to establish electrical connection therebetween. The bottom area of the first through slot 200 is indicated by the dashed box in the drawings. As shown in FIG. 12 and FIG. 13, a second notch 102 is formed on a side surface of the first housing sleeve 10, and the protrusion 130 is clamped inside the second notch 102. For male connectors 1 and female connectors 2 of different specifications, the position and quantity of the protrusions 130 and second notches 102 are configured to avoid cross-mating between connectors of different specifications.

Aside from the aforesaid first power transmission assembly 11, the female connector 2 further includes a second power transmission assembly 23 as illustrated in FIG. 14. The second power transmission assembly 23 comprises a second electrical terminal 230. An end of the second electrical terminal 230 connected to the female electrode 22 is bent at a preset angle to form a stepped electrode structure together with the female electrode 22. A first receiving groove 201 is disposed on the bottom surface of the second housing sleeve 20. The second electrical terminal 230 is fixed to the base of the second ferrule assembly 21, and its bent portion is embedded into the first receiving groove 201 at the rear end of the second ferrule assembly 21. After the second ferrule assembly 21 is fixed inside the second housing sleeve 20, a bidirectional clamping structure for locking the second electrical terminal 230 is formed. Detailed descriptions of the second electrical terminal 230 and the female electrode 22 will be elaborated in subsequent embodiments and are omitted herein.

To facilitate positioning of the second electrical terminal 230, the second power transmission assembly 23 includes a columnar body 231 mated with the second ferrule assembly 21 and a positioning member 232 fixed on the columnar body 231, as shown in FIG. 14. The positioning member 232 is configured to accommodate the second electrical terminal 230. The positioning member 232 is provided with a rectangular groove 2321 for mounting the second electrical terminal 230. A through window 2322 is formed at the end of the rectangular groove 2321 away from the female electrode 22, which serves as a welding area for connecting the conductive wire 3 to the second electrical terminal 230.

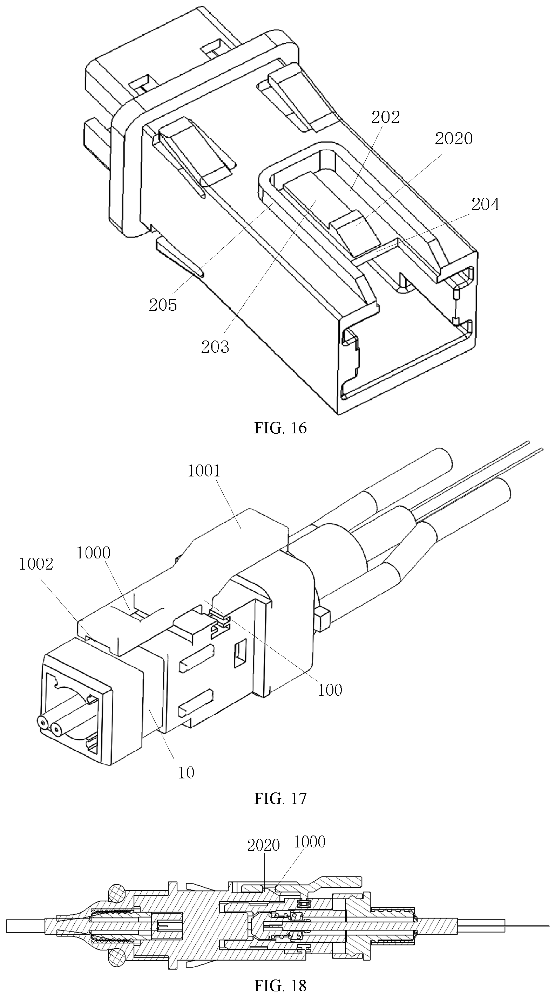

Regarding the mating structure of the male connector 1 and the female connector 2, in one embodiment, the two connectors are connected and fixed via an interlock structure arranged on the first housing sleeve 10 and the second housing sleeve 20. As shown in FIG. 16, a first notch 202 extending axially for a preset distance is formed on the upper surface of the second housing sleeve 20 of the female connector 2 near the mating end of the female connector 2 with the male connector 1, and a first locking head 2020 is disposed on the first notch 202. As shown in FIG. 17, a crossbar fitted with a first locking opening 1000 and a pressing portion 1001 is connected to the upper surface of the first housing sleeve 10 via a support rod 100. The first locking opening 1000 and the pressing portion 1001 are arranged on two opposite sides of the support rod 100. After the male connector 1 is mated with the female connector 2, the first locking head 2020 engages with the first locking opening 1000 to complete locking, and the first notch 202 receives a part of the crossbar above the first housing sleeve 10. Specifically, the support rod 100 is made of rigid plastic. The crossbars on opposite sides of the support rod 100 form a seesaw mechanism to realize locking and unlocking between the first locking head 2020 and the first locking opening 1000. Alternatively, the support rod 100 is made of moderately rigid elastic plastic. Pressing the pressing portion 1001 on one side of the support rod 100 can release the lock between the first locking head 2020 and the first locking opening 1000.

The proposed optoelectronic mixer is mainly applied in vibration-prone environments such as vehicle cabins, so anti-vibration performance is a key consideration in structural design. The single lock structure consisting of the first locking head 2020 and the first locking opening 1000 cannot deliver optimal anti-vibration performance. Particularly for compact connectors, if the first locking opening 1000 is arranged close to the end of the crossbar and adjacent to the support rod 100, a large moment difference will exist between the pressing portion 1001 and the first locking opening 1000 relative to the support rod 100, resulting in instability under vibration. To solve this problem, the present invention provides a preferred improved solution. As shown in FIG. 16, a limiting portion 203 in the form of a boss is further arranged on the female connector 2 and extends axially along the first locking head 2020. Correspondingly, as shown in FIG. 17, an elongated concave groove 1002 is formed on the crossbar of the male connector 1 where the first locking opening 1000 is located. Referring collectively to FIG. 16, FIG. 17 and FIG. 18, when the first locking head 2020 is locked with the first locking opening 1000, the elongated concave groove 1002 fits over the limiting portion 203 and covers the first locking opening 1000. This structure balances the moment of the crossbar with the pressing portion 1001 relative to the support rod 100. More importantly, the engagement between the elongated concave groove 1002 and the limiting portion 203 provides auxiliary restraint, which greatly enhances the lock stability between the first locking head 2020 and the first locking opening 1000 under vibration. Even if external vibration causes an impact on the crossbar inside the first notch 202 across the fence structure 205, the combined structure of the elongated concave groove 1002 and the limiting portion 203 can effectively absorb the impact force without compromising locking reliability.

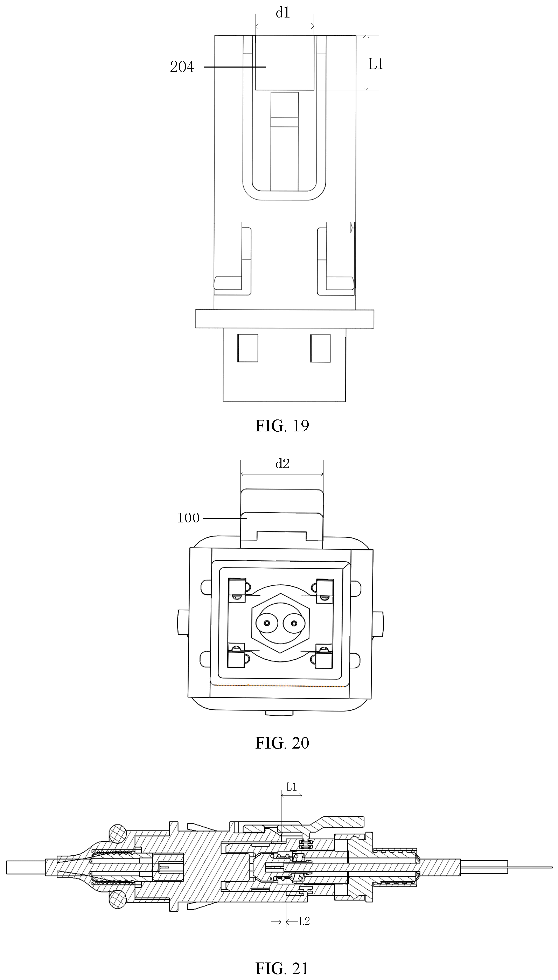

The actual size of the connector is much smaller than shown in the drawings. In consideration of the overall length after mating, a first cutout 204 is formed at the end of the first notch 202 close to the mating end of the female connector 2, as shown in FIG. 19 and FIG. 20. The width d1 of the first cutout 204 is equal to the width d2 of the support rod 100, and the length L1 of the first cutout 204 matches the axial insertion distance of the support rod 100 during mating. FIG. 21 is a cross-sectional view of the fully mated connectors. The length L1 reserves an extra space L2 beyond the insertion distance of the support rod 100, which allows proper elastic deformation of the support rod 100 during locking and unlocking operations.

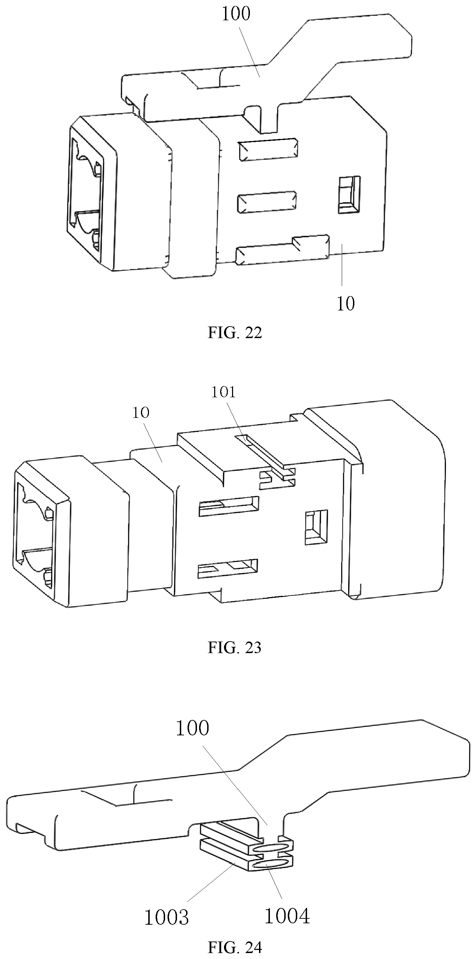

In practical applications, the support rod 100 can be integrally formed with the first housing sleeve 100, as shown in FIG. 22. However, the joint between the bottom of the support rod 100 and the first housing sleeve 10 is prone to fatigue fracture after long-term use. In this case, the entire first housing sleeve 10 needs to be replaced, leading to inconvenient maintenance. To address this defect, an improved structure is provided as shown in FIG. 23 and FIG. 24. A second receiving groove 101 extending inward is formed on a side surface of the first housing sleeve 10. A locking tab (1003) is disposed at the bottom of the support rod 100 and snapped into the second receiving groove 101 to fix the support rod 100 to the first housing sleeve 10. The locking tab 1003 is provided with an oval through hole 1004, which will be described in detail in subsequent extended embodiments and will not be discussed here.

The present invention further provides a method for using the above in-vehicle optoelectronic mixer. The method includes: determining whether electrode polarity reversal is required according to the installation environment of an optoelectronic hybrid connector; if polarity reversal is needed, rotating the rotating housing 110 from a first position to a second position to complete electrode polarity reversal.

### Embodiment 2

Embodiment 2 is developed based on Embodiment 1 and provides another adjustable optoelectronic mixer applicable to scenarios requiring polarity reversal of electrical terminals. The structure of the locking tab will be described in detail hereinafter.

This embodiment constitutes an alternative solution parallel to that set forth in Embodiment 1. For the sake of concise and coherent description, Embodiment 2 adopts an independent numbering system different from that of Embodiment 1. For components with identical or similar names and structures, those skilled in the art can readily understand the corresponding technical features. Differences in reference numerals shall not be construed to mean that there is no correlation between the two embodiments. Persons skilled in the art may reasonably determine the structural correspondence between Embodiment 2 and Embodiment 1 based on the textual description and accompanying drawings.

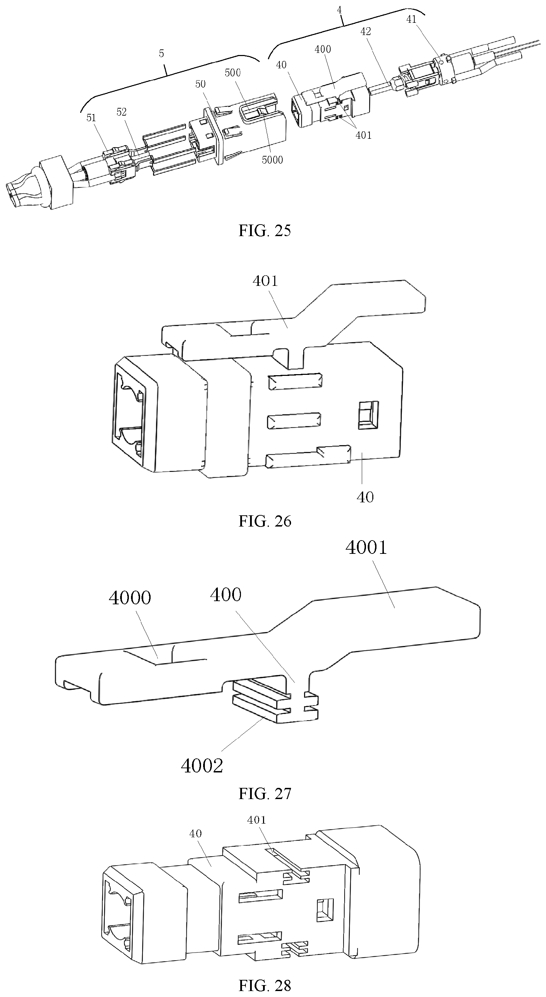

This embodiment 2 provides an adjustable optoelectronic mixer, as shown in FIGS. 25-34, comprising a male connector 4 and a female connector 5 mating with the male connector 4.

As shown in FIG. 25, the male connector 4 includes a first housing sleeve 40, a first power transmission assembly 41, and a first ferrule assembly 42. The first ferrule assembly 42 is disposed on the central axis of the first power transmission assembly 41, which is snapped inside the first housing sleeve 40. A support rod 400 is mounted on the upper surface of the first housing sleeve 40 and provided with a first locking opening 4000 and a pressing portion 4001 arranged on two opposite sides of the support rod 400.

As shown in FIG. 26, the support rod 400 may be fixedly connected to the first housing sleeve 40. However, in practical use, frequent left-and-right toggling of the support rod 400 over long service life tends to cause fatigue fracture at the joint between the two components. Repair in this case requires replacement of the entire first housing sleeve 40, resulting in inconvenient maintenance. Accordingly, an optimized design adopts a split structure for the support rod 400 and the first housing sleeve 40. As illustrated in FIG. 27 and FIG. 28, a locking tab 4002 is arranged at the bottom of the support rod 400. The first housing sleeve 40 is formed with a locking groove 401 corresponding to the locking tab 4002. The locking groove 401 extends inward from the side surface of the first housing sleeve 40 and is symmetrically arranged on the upper and lower surfaces thereof.

Specifically, the support rod 400 is made of rigid plastic. The crossbars on opposite sides of the support rod 400 form a seesaw mechanism to realize locking and unlocking between the first locking head 5000 and the first locking opening 4000. Alternatively, the support rod 400 is made of moderately rigid elastic plastic. Pressing down the pressing portion 4001 on one side of the support rod 400 releases the lock between the first locking head 5000 and the first locking opening 4000.

As shown in FIG. 25, the female connector 5 includes a second housing sleeve 50, a second power transmission assembly 51 and a second ferrule assembly 52. The second ferrule assembly 52 is arranged on the central axis of the second power transmission assembly 51. A first notch 500 extending axially for a preset length is formed on the upper surface of the second housing sleeve 50 near the mating end of the female connector 5 and the male connector 4, and a first locking head 5000 is disposed on the first notch 500. After the female connector 5 is mated with the male connector 4, the first locking head 5000 engages with the first locking opening 4000 to complete locking, and the first notch 500 receives part of the crossbar located above the male connector 4.

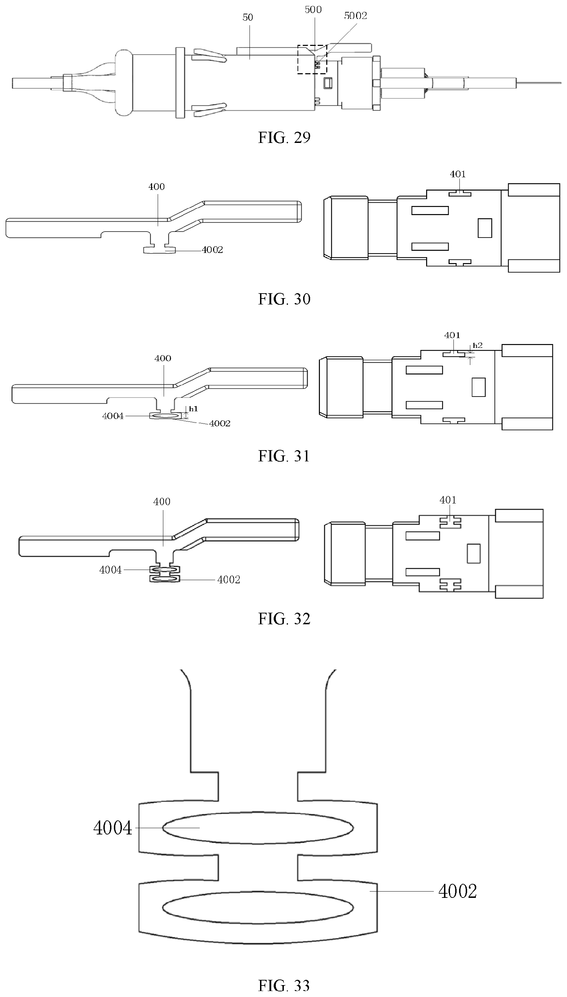

When the first locking head 5000 and the first locking opening 4000 are locked to each other, the end of the support rod 400 where the first locking opening 4000 is arranged is restrained by the first locking head 5000. A portion of the area where the locking tab 4002 below the support rod 400 is disposed is received inside the second housing sleeve 50, as indicated by the dashed box in FIG. 29, which limits the sliding range of the locking tab 4002 relative to the locking groove 401. This optoelectronic hybrid connector is typically used in vibration-prone environments such as vehicle cabins. To further prevent the support rod 400 from detaching under vibration, an improved structure is adopted in one embodiment. As shown in FIG. 30, the bottom of the support rod 400 is fitted with a locking tab 4002, and the first housing sleeve 40 is provided with a locking groove 401 matching the locking tab 4002 in both quantity and dimension. In practical application, the support rod 400 and the first housing sleeve 40 are generally made of rigid plastic. If the locking tab 4002 is designed as a conventional rectangular block, it is difficult to achieve a perfect dimensional fit with the locking groove 401. A full dimensional match will cause difficult assembly during insertion, while an undersized locking tab will result in unstable installation inside the locking groove. Accordingly, an optimized solution is provided herein. As shown in FIG. 31, the connector is equipped with at least one locking tab 4002. Each locking tab 4002 is formed with a through hole 4004, which is either oval or rectangular and penetrates two opposite side surfaces of the locking tab 4002. The maximum height h1 of the locking tab 4002 is greater than the height h2 of the locking groove 401, with a preset height difference therebetween. Although a single locking tab 4002 as shown in FIG. 31 can form a flexible fit with the locking groove 401 via the through hole 4004, it may fail to guarantee overall snap stability. Taking both material cost and structural stability into consideration, the preferred embodiment adopts two locking tabs 4002 arranged in an I-shape, as illustrated in FIG. 32. Correspondingly, two locking grooves 401 are also arranged in an I-shape. This configuration ensures reliable snap performance while controlling material costs.

In the above preferred embodiment, the through hole 4004 provides a flexible tolerance for the fitting between the locking tab 4002 and the locking groove 401. When the oval through hole 4004 is adopted, the maximum height of the locking tab 4002 is greater than the height of the locking groove 401, with a preset height difference therebetween. As shown in FIG. 33, the top and bottom surfaces formed by the two long sides of the locking tab 4002 with the oval through hole 4004 are curved in its free state. The width of the locking tab is slightly smaller than that of the locking groove, and the overall height between the highest and lowest points of the curved surfaces exceeds the groove height by a preset difference of 1 mm to 2 mm. When the locking tab 4002 is inserted into the locking groove 401, the larger overall height of the locking tab 4002 causes its top and bottom surfaces to be compressed by the locking groove 401. The height of the locking tab 4002 then matches the height of the locking groove 401. As previously described, the top and bottom surfaces of the locking tab 4002 are curved. Compression expands the width of the locking tab 4002 to fit the inner width of the locking groove 401, which explains why the initial width of the locking tab 4002 is designed to be slightly smaller than that of the locking groove 401. If the top and bottom surfaces were flat instead of curved, compression would make them cave inward and create gaps between the locking tab 4002 and the locking groove 401, resulting in loose engagement. Combined with the compression fit and the I-shaped layout of the locking tab 4002, the structure achieves firm and stable snap inside the locking groove 401.

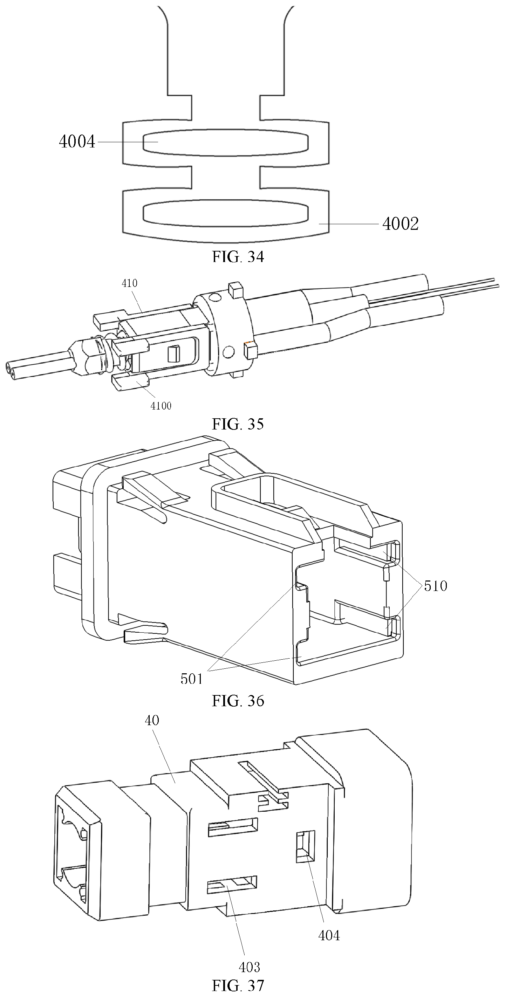

Alternatively, the through hole 4004 may be a rectangular opening, as shown in FIG. 34. The upper and lower surfaces of the rectangular through hole 4004 are also configured with a natural curvature. The working principle is identical to that of the oval through hole: the curved surfaces are flattened under compression from the locking groove 401, and the rectangular through hole 4004 is fully shaped accordingly. The dimensional design and snap stability mechanism for rectangular through holes are the same as those described above, and thus will not be repeated here.

In a first aspect, the present invention provides an adjustable optoelectronic mixer. An electrical connection structure is ingeniously integrated into a conventional pure optoelectronic connector. The overall size of the optical interface does not need to be increased during implementation. The inherent features of the original structure are fully utilized to identify spaces for arranging the electrical connection structure. This design prevents electric leakage and maintains the structural strength of the integrated optoelectronic connector.

In a second aspect, the support rod 400 mounted on the first housing sleeve 40 is designed to be detachable. To reverse the polarity of the connector, remove the support rod 400 from the locking groove 401 on the upper surface of the first housing sleeve 40, rotate the first housing sleeve 40 by 180 degrees, and then reinstall the support rod 400 into the locking groove 401 on the upper surface of the rotated first housing sleeve 40. This method enables convenient polarity reversal and rapid power switching without disassembling the entire connector.

In the optoelectronic hybrid connector of the present embodiment, electrical transmission between the male connector 4 and the female connector 5 is realized via the first power transmission assembly 41 and the second power transmission assembly 51. Electrical connection between the two assemblies enables power transmission. In one embodiment, as shown in FIG. 35, the first power transmission assembly 41 includes a male electrode 410. As shown in FIG. 36, the second power transmission assembly 51 includes a female electrode 510. Electrical connection between the male connector 4 and the female connector 5 is established when the male electrode 410 abuts the female electrode 510. The present design allows the male connector 4 and the female connector 5 to be manufactured in multiple specifications, and ensures that only connectors of matching specifications can be mated while preventing connection between mismatched products. As shown in FIG. 35 and FIG. 36, the end of the male electrode 410 for mating with the female electrode 510 is formed into a foolproof protrusion 4100. The inner wall of the second housing sleeve 50 is provided with a first through slot 501 corresponding to the protrusion 4100. The female electrode 510 is embedded at the bottom of the first through slot 501, and the protrusion 4100 abuts the female electrode 510 to form an electrical connection between the male electrode 410 and the female electrode 510. As shown in FIG. 37, a second notch 403 is formed on the side surface of the first housing sleeve 40, and the protrusion 4100 is snapped inside the second notch 403. For male connectors 4 and female connectors 5 of different specifications, the position and quantity of the protrusions 4100 and the second notchs 403 are configured to prevent cross-mating between connectors of different specifications.

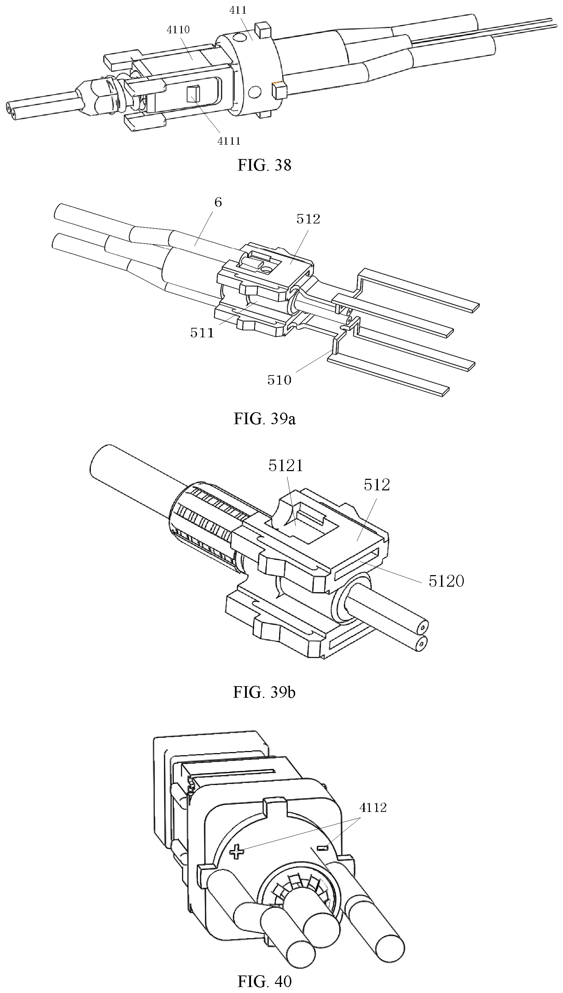

To facilitate positioning of the female electrode 510, as shown in FIG. 39a, the second power transmission assembly 51 includes a columnar body 511 mated with the second ferrule assembly 52 and a positioning member 512 fixed to the columnar body 511. The positioning member 512 is configured to accommodate the female electrode 510. As shown in FIG. 39b, the positioning member 512 is provided with a rectangular groove 5120 for mounting the female electrode 510. A through window 5121 is formed at the end of the rectangular groove 5120 away from the connector head, which serves as a welding area for connecting the wire 6 to the female electrode 510. The male electrode and female electrode will be described in further detail in subsequent embodiments, so no further elaboration is given herein.

To secure the first power transmission assembly 41, as shown in FIG. 38 and FIG. 39, the first power transmission assembly 41 comprises a cylindrical base 411 and a square column base 4110 formed integrally on the cylindrical base 411. The cross-sectional size of the cylindrical base 411 is larger than that of the square column base 4110. A second locking head 4111 is arranged on the side surface of the square column base 4110, and a second locking opening 404 is formed on the side surface of the first housing sleeve 40. The second locking head 4111 and the second locking opening 404 are arranged in mutual correspondence. When the male connector 4 is mated with the female connector 5, the second locking head 4111 and the second locking opening 404 jointly form an interlocking structure.

For polarity switching, either the male connector 4 or the female connector 5 can be flipped to reverse the electrical polarity between the two components. In this embodiment, the male connector 4 is flipped to achieve polarity reversal. The male electrode 410 arranged inside the first power transmission assembly 41 consists of a positive electrical terminal and a negative electrical terminal, which are respectively disposed on the left and right sides of the first ferrule assembly 42. Wires 6 are connected to the rear portion of the male electrode 410 for power supply. To distinguish the positive terminal from the negative terminal during each polarity reversal operation, an electrode marking 4112 is arranged on the square column base 4110 as shown in FIG. 40, and the position of the electrode marking 4112 corresponds to the male electrode 410 of the first power transmission assembly 41. In one embodiment, the electrode marking 4112 is disposed on the end face at the rear portion of the square column base 4110. A plus sign (+) is marked at the position corresponding to the positive electrical terminal, and a minus sign (-) is marked at the position corresponding to the negative electrical terminal.

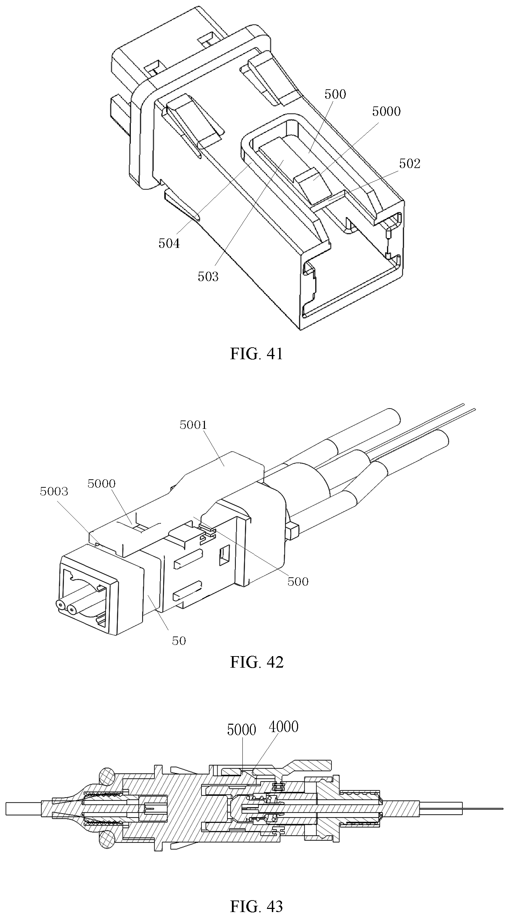

The proposed optoelectronic mixer is mainly applied in vibration-prone environments such as vehicle cabins, so anti-vibration performance is a key consideration in structural design. The simple locking structure composed of the first locking head 5000 and first locking opening 4000 cannot deliver optimal anti-vibration performance. Particularly for compact connectors, if the first locking opening 4000 is arranged close to the end of the crossbar and adjacent to the support rod 400, a large moment difference will exist between the pressing portion 4001 and the first locking opening 4000 relative to the support rod 400, which will lead to instability under vibration. To solve this problem, the present invention provides an optimized improved solution. As shown in FIG. 41, a first limiting portion 503 in the form of a boss is further arranged along the axial extension direction of the first locking head 5000 on the first notch 500. Correspondingly, as shown in FIG. 42, an elongated concave groove 4003 is formed on the crossbar of the male connector 4 where the first locking opening 4000 is located. Referring collectively to FIG. 41, FIG. 42 and FIG. 43, when the first locking head 5000 is engaged with the first locking opening 4000, the elongated concave groove 4003 fits over the first limiting portion 503 and covers the position of the first locking opening 4000. This structure balances the moment of the crossbar with the pressing portion 4001 relative to the support rod 400. More importantly, the engagement between the elongated concave groove 4003 and the first limiting portion 503 provides auxiliary restraint, which greatly enhances the stability of the locked state between the first locking head 5000 and the first locking opening 4000. Even if external vibration causes an impact on the crossbar inside the first notch 500 after breaking through the fence structure 504 shown in FIG. 41, the combined structure of the elongated concave groove 4003 and the first limiting portion 503 can effectively absorb the impact force without affecting the locking reliability between the first locking head 5000 and the first locking opening 4000.

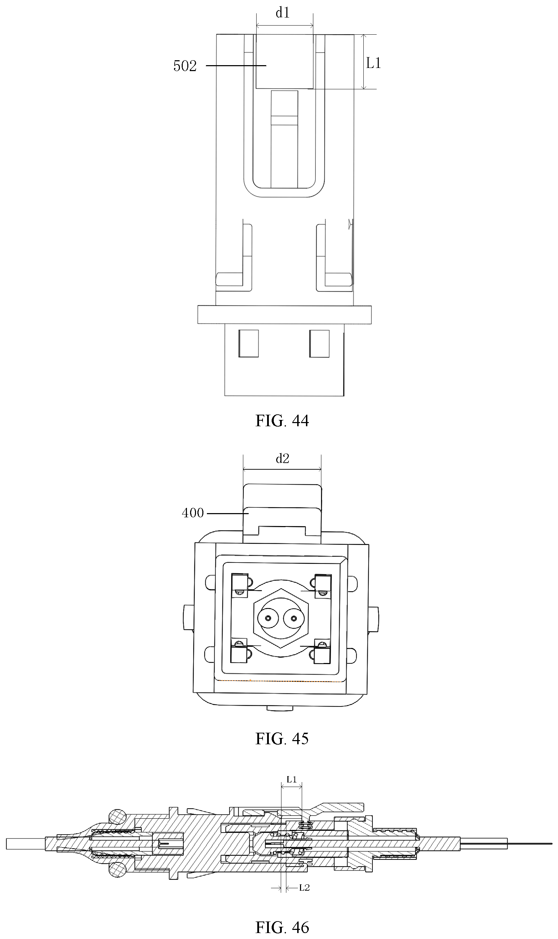

In a practical application, the actual size of the connector is much smaller than it appears in the accompanying drawings. To optimize the overall length after assembly, a first cutout 502 is formed at the end of the first notch 500 near the mating end of the female connector 5, as shown in FIG. 44 and FIG. 45. The width d1 of the first cutout 502 is designed to fully accommodate the width d2 of the support rod 400. The length L1 of the first cutout 502 matches the axial insertion distance of the support rod 400 when the male connector 4 mates with the female connector 5. FIG. 46 is a cross-sectional view of the fully mated connectors. The length L1 reserves an extra clearance L2 beyond the insertion depth of the support rod 400, which provides sufficient elastic deformation space for the support rod 400 during locking and unlocking operations.

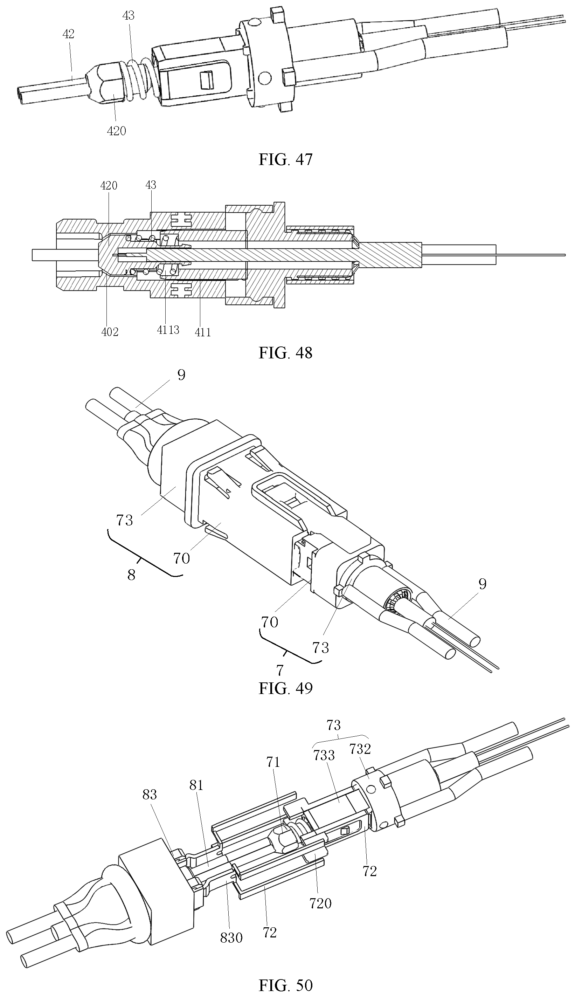

To ensure reliable mating between the ferrule assemblies of the male connector 4 and the female connector 5 and compensate for manufacturing tolerances of housing components, a spring 43 is adopted to maintain stable abutting force between the two ferrule assemblies. In a possible implementation of this embodiment, as shown in FIG. 47 and FIG. 48, the male connector 4 is further equipped with a spring 43. A limiting block 420 is arranged on the first ferrule assembly 42, and a ferrule guide groove 402 is formed on the first housing sleeve 40. A first limiting groove 4113 is disposed on the square column base 4110 of the first power transmission assembly 41. The spring 43 abuts against the limiting block 420 and the bottom of the first limiting groove 4113. When the male connector 4 mates with the female connector 5, the spring 43 is compressed, and the limiting block 420 comes into contact with the bottom of the ferrule guide groove 402.

This embodiment also provides a method for using the adjustable optoelectronic mixer described above. The method includes determining whether electrode polarity reversal is required according to the installation environment of an optoelectronic hybrid connector. If the polarity reversal is needed, remove the support rod 400 from the locking groove 401 on the first housing sleeve 40, then reinstall the support rod 400 into the locking groove 401 on the opposite side of the first housing sleeve 40 to complete the electrode polarity reversal.

### Embodiment 3

Embodiment 3 provides a new type of optoelectronic mixer based on Embodiment 1 and Embodiment 2. This embodiment is an alternative solution parallel to those disclosed in Embodiment 1 and Embodiment 2. For the sake of clear and coherent description, Embodiment 3 adopts an independent reference numeral system different from that used in Embodiment 1 and Embodiment 2. For components with identical or similar names and structures, those skilled in the art can readily understand the corresponding technical features. Differences in reference numerals shall not be deemed to indicate a lack of correlation between the embodiments. Those skilled in the art may reasonably determine the structural correspondence between Embodiment 3 and Embodiment 1 by referring to the textual description and accompanying drawings.

This embodiment provides a novel optoelectronic mixer, as shown in FIGS. 49-61, comprising a male connector 7 and a female connector 8.

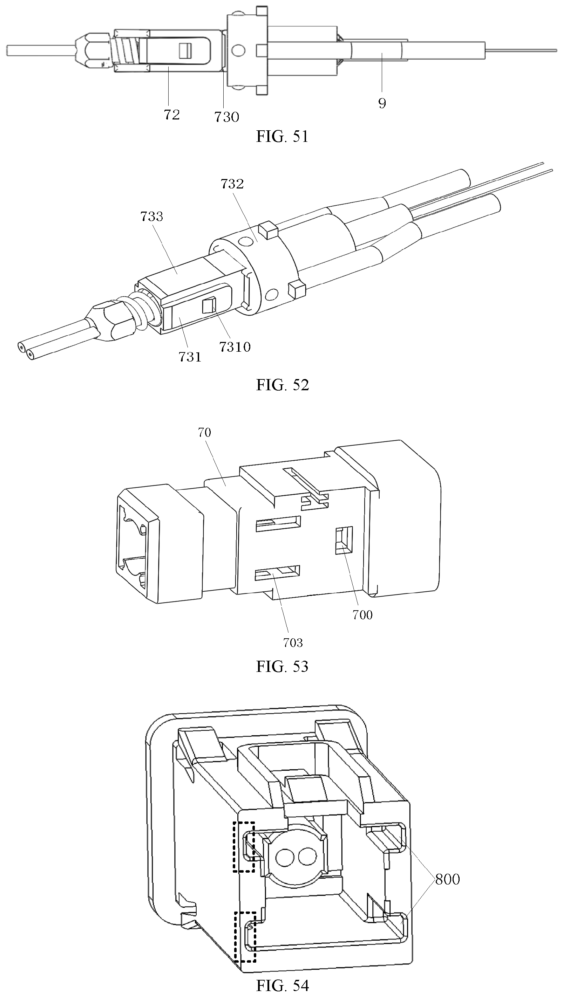

As shown in FIG. 49 and FIG. 50, the male connector 7 includes a first housing sleeve 70, a first ferrule assembly 71, a male electrode 72 and a first power transmission assembly 73. The male electrode 72 is arranged on at least one side wall where the first power transmission assembly 73 is sleeved with the first housing sleeve 70. The first ferrule assembly 71 is fixed to the central axis of the first power transmission assembly 73. The first housing sleeve 70 is fitted over the first power transmission assembly 73 and connected thereto by snapping. In one embodiment, the electrical connection between the male electrode 72 and the first electrical terminal 730 is configured as shown in FIG. 51. Two semi-circular protrusions are formed at two ends of the first electrical terminal 730. The contact surface of the male electrode 72 that abuts the first electrical terminal 730 is flat. Electrical connection is established when the male electrode 72 contacts the protrusions on the first electrical terminal 730. A wire 9 is connected to the rear portion of the first power transmission assembly 73 and coupled to the first electrical terminal 730 inside the first power transmission assembly 73.

As shown in FIG. 51 and FIG. 52, a first limiting portion 731 in the form of a boss is disposed on the surface of the first power transmission assembly 73. The male electrode 72 is of a concave structure, and a protrusion 720 is formed at the ends of two side walls of the concave structure. The male electrode 72 is mounted on the side wall of the first limiting portion 731, and the thickness of the first limiting portion 731 matches that of the male electrode 72. In the preferred embodiment, the thickness of the first limiting portion 731 is equal to that of the male electrode 72. During actual production, the thickness of the male electrode 72 excluding the protrusion 720 may also be slightly smaller than the height of the first limiting portion 731. In terms of the layout of protrusion 720, taking the square cross-section of the first housing sleeve 70 as a reference, the protrusion 720 may be disposed at the middle position of one or more sides of the square cross-section, and/or at one or more vertices of the square cross-section.

With reference to FIG. 52, a first locking head 7310 for locking with the first housing sleeve 70 is arranged on the surface of the first limiting portion 731 facing the first housing sleeve 70. After locking, the upper surface of the first limiting portion 731 abuts the inner surface of the first housing sleeve 70, which limits the movable range of the male electrode 72 in the height direction of the first limiting portion 731. The protrusion 720 penetrates the matching through hole on the first housing sleeve and extends outward for a preset distance, forming a limit structure for the male electrode 72 on the horizontal plane of the first limiting portion 731. As shown in FIG. 53, a first locking opening 700 corresponding to the first locking head 7310 is formed on the side surface of the first housing sleeve 70. The first power transmission assembly 73 is fixed to the first housing sleeve 70 when the first locking head 7310 is locked with the first locking opening 700.

Further referring to FIG. 50, FIG. 51 and FIG. 52, the first power transmission assembly 73 includes a cylindrical base 732 and a square column base 733 integrally formed on the cylindrical base 732. The cross-sectional dimension of the cylindrical base 732 is larger than that of the square column base 733, and the first limiting portion 731 is formed on the square column base 733. Specifically, the first electrical terminal 730 is arranged on the side of the cylindrical base 732 facing the first limiting portion 731 on the square column base 733. After the male electrode 72 is externally embedded in the first limiting portion 731, the first electrical terminal 730 abuts the bottom of the concave part of the male electrode 72. The combined structure of the cylindrical base 732 and the square column base 733 facilitates product assembly and processing, especially for wiring between the male electrode 72 and the wire.

When the square column base 733 is fixed inside the second housing sleeve 80, the cylindrical base 732 is rotatably coupled to the second housing sleeve 80, and the cylindrical base 732 is also rotatably connected to the square column base 733. To switch the positive and negative polarities of two oppositely arranged male electrodes 72, rotate the cylindrical base 732 relative to the square column base 733 to reverse the abutting relationship between the two first electrical terminals 730 and two male electrodes 72. The polarity switching principle achieved by relative rotation between the square column base and the cylindrical base 732 has been described in detail in Embodiment 1 and will not be repeated herein.

Referring again to FIG. 49 and FIG. 50, the female connector 8 includes a second housing sleeve 80, a second ferrule assembly 81, a female electrode 82 and a second power transmission assembly 83. The female electrode 82 is disposed on the inner wall of the second housing sleeve 80 and embedded at the bottom of a concave groove 800 formed on the second housing sleeve 80. The bottom area of the concave groove 800 is indicated by the dashed box in FIG. 54. The second power transmission assembly 83 is mated with the second ferrule assembly 81, and second electrical terminals 830 are respectively arranged on two sides of the second power transmission assembly 83. When the male connector 7 mates with the female connector 8, the end faces of the first ferrule assembly 71 and the second ferrule assembly 81 abut each other, and the foolproof protrusion 720 contacts one end of the female electrode 82 at the bottom of the groove.

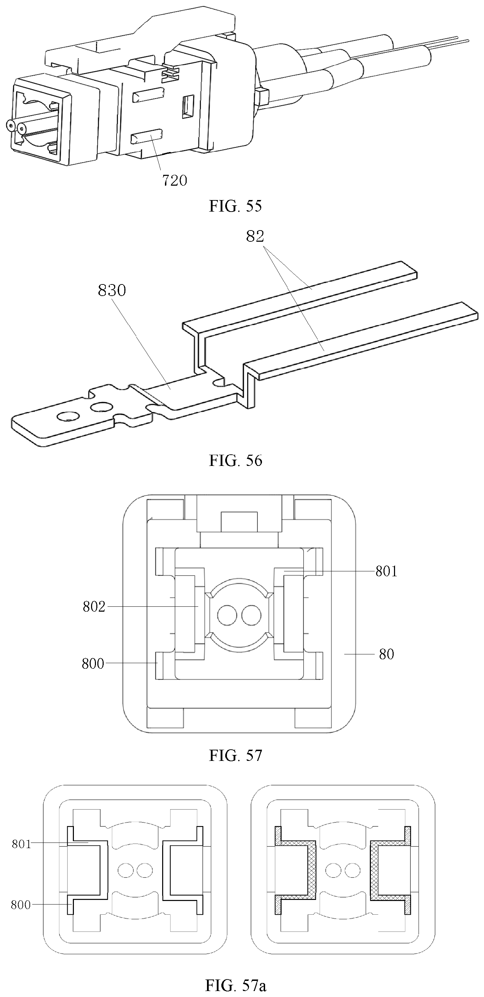

This structure enables the male connector 7 and the female connector 8 to be manufactured in multiple specifications, and ensures that only connectors of matching specifications can be mated while preventing connection between mismatched products. With reference to FIG. 50 and FIG. 55, the end of the male electrode 72 for mating with the female electrode 82 is formed with the protrusion 720. The protrusion 720 extends outward through the matching through hole on the first housing sleeve 70 for a preset distance, so that the protrusion 720 can not only establish electrical connection with the female electrode 82 on the female connector 8, but also serve as a foolproof structure to prevent cross-mating between male connectors and female connectors of different specifications. Specifically, as shown in FIG. 53 and FIG. 56, a first notch 703 is formed on the side surface of the first housing sleeve 70, and the protrusion 720 is snapped inside the first notch 703.

As shown in FIG. 54, a concave groove 800 is formed axially along the inner wall of the second housing sleeve 80. One end of the concave groove 800 serves as a foolproof groove, while the other end extends through the second ferrule assembly 81 arranged at the central axis of the second housing sleeve 80 and communicates with the second power transmission assembly 83 at the rear of the second ferrule assembly 81. For the male connector 7 and female connector 8 of different specifications, the arrangement and quantity of the protrusion 720 and the concave groove 800 are configured to prevent mismatched connectors from being mated. The female electrode 82 is received inside the concave groove 800. As shown in FIG. 56, the end of the second electrical terminal 830 connected to the female electrode 82 is bent at a preset angle to form a stepped electrode structure together with the female electrode 82. FIG. 57 is a view of the second housing sleeve 80 looking from the head toward the rear portion. The second electrical terminal 830 is fixed to the base of the second ferrule assembly 81, and its bent portion is embedded into the first receiving groove 801 at the rear of the second ferrule assembly 81. After the second ferrule assembly 81 is secured inside the second housing sleeve 80, a bidirectional locking structure is formed to lock the second electrical terminal 830. FIG. 57a is a view of the second housing sleeve 80 looking from the rear toward the head. The first receiving groove 801 communicates with the concave groove 800 to accommodate the connected second electrical terminal 830 and the female electrode 82. In the partial view on the right side of FIG. 57a, the grid area holds the bent section where the second electrical terminal 830 connects to the female electrode 82, and the slanted area accommodates the female electrode 82. As further shown in FIG. 57, a first through slot 802 is formed at the bottom of the first receiving groove 801 and runs through the second housing sleeve 80 to accommodate the main body of the second electrical terminal 830. During assembly, insert the female electrode 82 into the concave groove 800 from the rear portion of the second housing sleeve 80, then push the combined female electrode 82 and second electrical terminal 830 inward until the bent section abuts the first receiving groove 801.

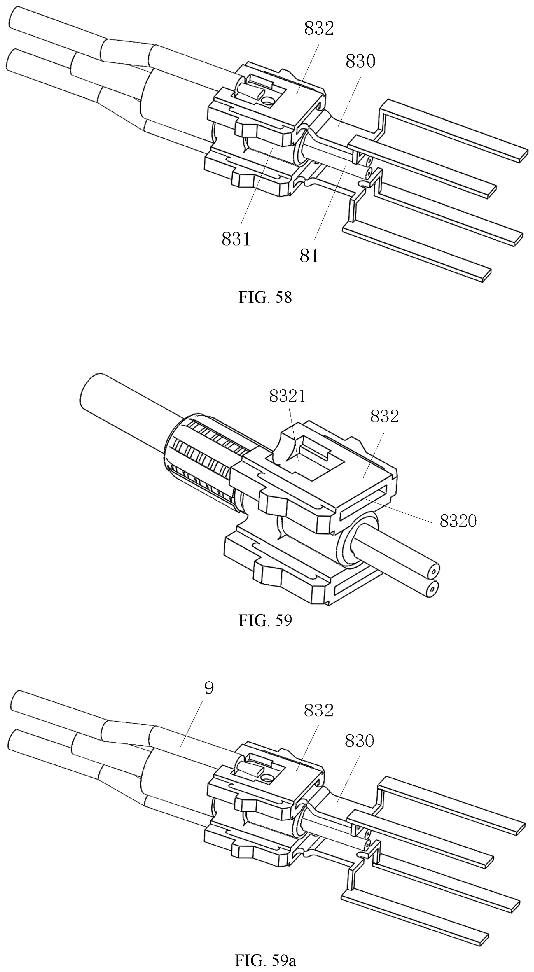

As shown in FIG. 58, FIG. 59 and FIG. 59a, the second electrical terminal 830 is fixed onto the positioning member 832 of the second power transmission assembly 83. The second electrical terminal 830 is embedded inside the positioning member 832, which is provided with a rectangular groove 8320 for installation. A through window 8321 is formed at the end of the rectangular groove 8320 away from the bent joint of the second electrical terminal 830 and the female electrode 82, acting as a welding area for the wire 9 and the second electrical terminal 830. A semicircular cutout is formed on one side of the through window 8321 to fit the profile of the wire 9. The reserved shell section of the positioning member 832 at the terminal end of the rectangular groove 8320 provides abutment limit during installation of the second electrical terminal 830.

Referring to FIG. 50, when the male connector 7 mates with the female connector 8, the first ferrule assembly 71 is joined with the second ferrule assembly 81, and the protrusion 720 abuts one end of the female electrode 82 to establish electrical connection between the male electrode 72 and the female electrode 82.

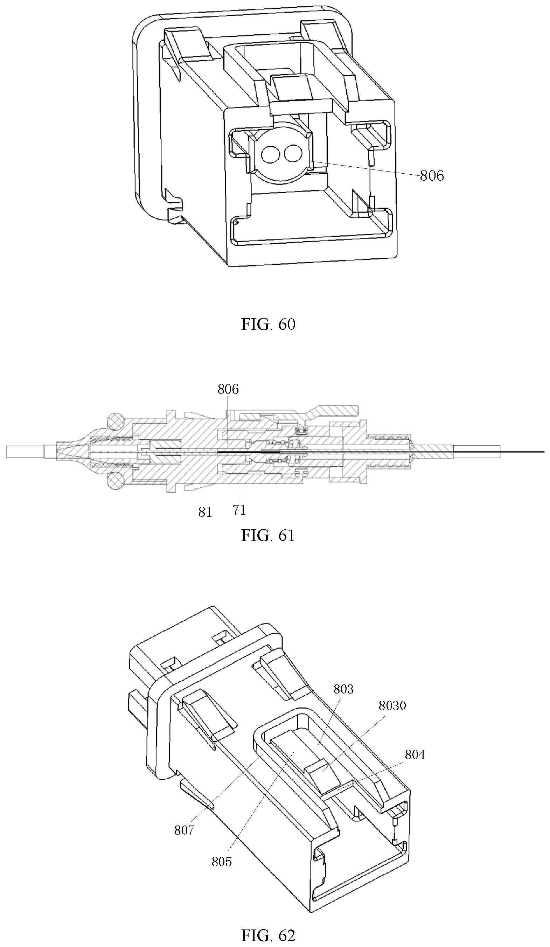

To ensure precise alignment between the first ferrule assembly 71 and the second ferrule assembly 81, a coupling unit 806 is arranged at the center of the second housing sleeve 80 as shown in FIG. 60 to mate the two ferrule assemblies. As shown in FIG. 61, a through hole is formed at the central axis of the coupling unit 806, with a diameter matching that of the ceramic contact head of the first ferrule assembly 71. The ceramic contact head of the second ferrule assembly 81 abuts the bottom of the coupling unit 806 or is partially inserted into the through hole. During docking, the ceramic contact head of the first ferrule assembly 71 inserts into the through hole and makes contact with the ceramic contact head of the second ferrule assembly 81.

In a first aspect, the present invention provides a new optoelectronic mixer. An electrical connection structure is ingeniously integrated into a conventional pure optoelectronic connector. The overall size of the optical interface does not need to be increased. The inherent structural features are fully utilized to arrange the electrical connection layout. This design effectively prevents electric leakage and maintains the structural strength of the integrated optoelectronic connector.

In a second aspect, the protrusion 720 arranged on the male electrode 72 realizes electrical connection with the female electrode 82 while improving mating accuracy between the male connector 7 and the female connector 8, and guarantees the alignment precision of the first ferrule assembly 71 and the second ferrule assembly 81 inside the two connectors.

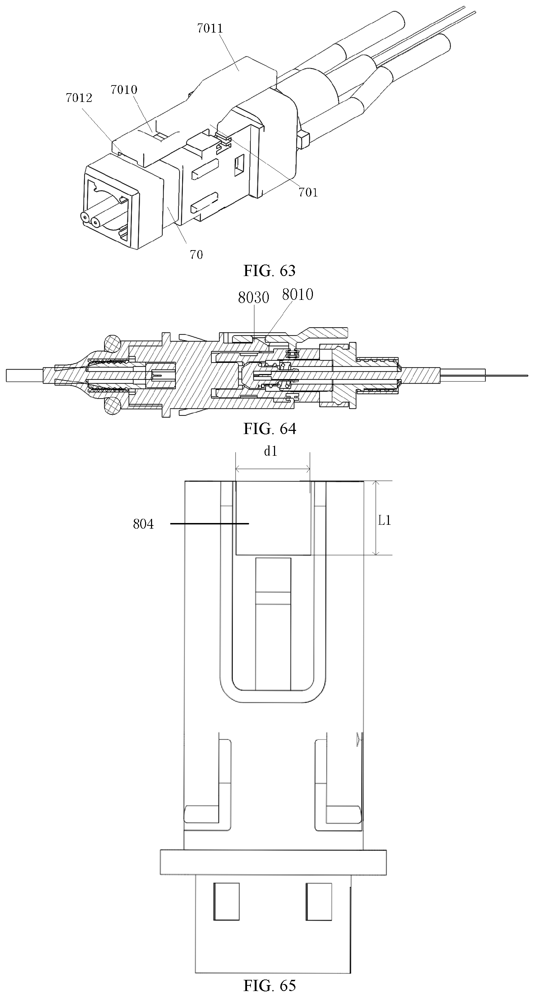

Regarding the mating structure of the male connector 7 and the female connector 8, an interlocking structure is adopted in one embodiment as shown in FIG. 62. The interlocking structure includes a second notch 803 and a second locking head 8030. The second notch 803 extending axially for a preset length is formed on the upper surface of the second housing sleeve 80 near the mating end of the female connector 8, and the second locking head 8030 is disposed on second notch 803. As shown in FIG. 63, a crossbar fitted with a second locking opening 7010 and a pressing portion 7011 is connected to an upper surface of the first housing sleeve 70 via the support rod 701. The second locking opening 7010 and the pressing portion 7011 are disposed on two opposite sides of the support rod 701. After the male connector 7 is mated with the female connector 8, the second locking head 8030 engages with second locking opening 7010 to complete locking, and the second notch 803 accommodates part of the crossbar above the first housing sleeve 70.

The proposed optoelectronic mixer is mainly applied in vibration-prone environments such as vehicle cabins, thus anti-vibration performance is a key design consideration. The locking structure composed merely of the first locking head 7310 and the first locking opening 700 cannot achieve the optimal anti-vibration effect. For compact connectors, if the first locking opening 700 is located close to the end of the crossbar and adjacent to the support rod 701, a large moment difference will exist between the pressing portion 7011 and the first locking opening 700 relative to the support rod 701, resulting in instability under vibration. To solve the above problem, an optimized solution is provided. As shown in FIG. 62, a second limiting portion 805 in the form of a boss is arranged along the axial direction of the second locking head 8030 on the second notch 803. Correspondingly, an elongated concave groove 7012 is formed on the crossbar of the male connector 7 where the second locking opening 7010 is located, as shown in FIG. 63. Referring collectively to FIG. 62, FIG. 63 and FIG. 64, when the second locking head 8030 is locked with the second locking opening 7010, the elongated concave groove 7012 fits over the second limiting portion 805 and covers the first locking opening 700. This structure balances the moment of the crossbar with the pressing portion 7011 relative to the support rod 701. More importantly, the cooperation between the elongated concave groove 7012 and the second limiting portion 805 provides auxiliary restraint, which greatly enhances the stability of the locked state between the first locking head 7310 and the first locking opening 700. Even if external vibration generates impact force that breaks through the fence structure 807 and strikes the crossbar inside the second notch 803, the combined structure of the elongated concave groove 7012 and the second limiting portion 805 can effectively absorb the impact without compromising the locking reliability.

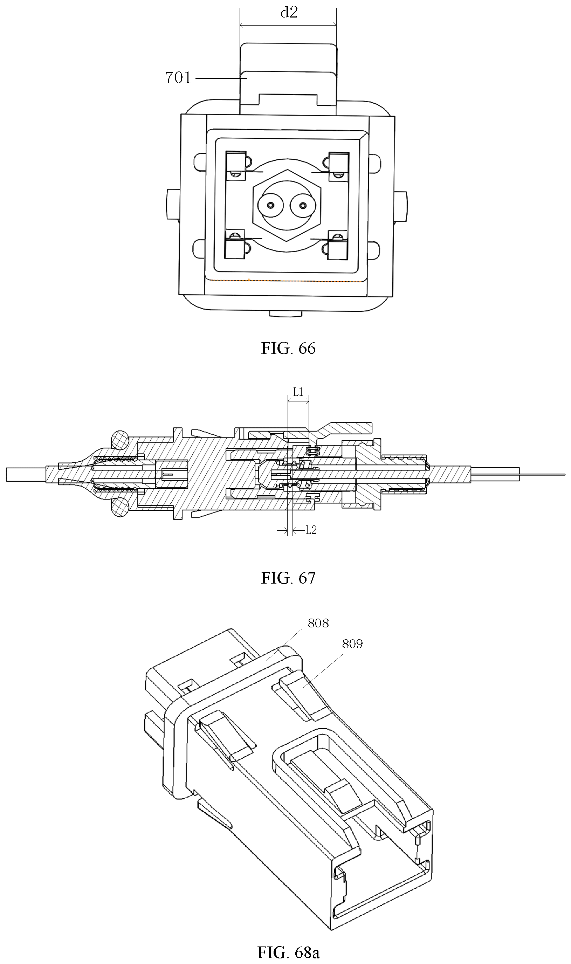

In practical application, the actual size of the connector is much smaller than it appears in the drawings. Taking the overall length after mating into consideration, a first cutout 804 is formed at the end of the second notch 803 near the mating end of the female connector 8, as shown in FIG. 65 and FIG. 66. The width d1 of the first cutout 804 exactly matches the width d2 of the support rod 701. The length L1 of the first cutout 804 meets the requirement for the axial insertion distance of the support rod 701 during mating of the male connector 7 and the female connector 8. FIG. 67 is a cross-sectional view of the fully assembled connectors. The length L1 reserves an extra clearance L2 beyond the insertion depth of the support rod 701, which provides an elastic deformation space for the support rod 701 during locking and unlocking operations.

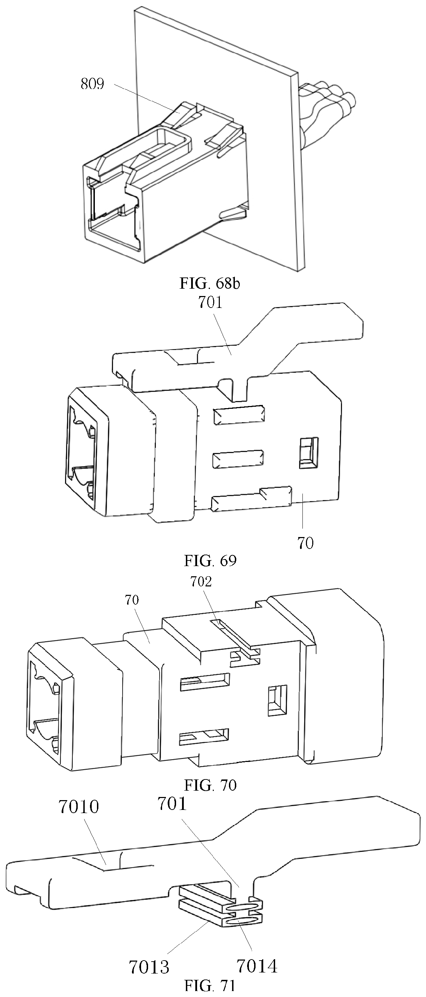

The proposed optoelectronic hybrid connector in this embodiment can be mounted on panels of vehicle converters and the like. As shown in FIG. 68a and FIG. 68, an annular boss 808 and locking spring clips 809 are arranged at the rear portion of the second housing sleeve 80 for panel installation. The maximum height between two opposite locking spring clips 809 is greater than the height of the mounting hole on the panel. During installation, feed the second housing sleeve 80 through the mounting hole from its head. The locking spring clips 809 are compressed when passing through the hole. When the panel reaches the platform between the annular boss 808 and the locking spring clips 809, the compression is released and the spring pieces 809 rebound, clamping the panel between the annular boss 808 and the locking spring clips 809. A plurality of mounting holes are usually arranged in an array on the converter panel to realize integrated installation of multiple connectors.

As shown in FIG. 69, the support rod 701 can be integrally formed with the first housing sleeve 70. However, the joint between the support rod 701 and the first housing sleeve 70 is prone to fatigue fracture after long-term use, which requires replacement of the entire first housing sleeve 70 and brings inconvenience to maintenance. To address this defect, an improved structure is provided as shown in FIG. 70 and FIG. 71. A second receiving groove 702 extending inward is formed on the side surface of the first housing sleeve 70. A locking tab 7013 is arranged at the bottom of the support rod 701 and clamped into the second receiving groove 702 to fix the support rod 701 onto the first housing sleeve 70. The locking tab 7013 is provided with an oval through hole 7014, whose structural design has been elaborated in Embodiment 2 and will not be repeated here.

The support rod 701 is made of rigid plastic. The crossbars on opposite sides of the support rod 701 form a seesaw mechanism to realize locking and unlocking between the second locking head 8030 and the second locking opening 7010. Alternatively, the support rod 701 is made of moderately rigid elastic plastic. Pressing down the pressing portion 7011 on one side of the support rod 701 can release the lock between the second locking head 8030 and the second locking opening 7010.

Embodiments of the present invention provide a novel optoelectronic mixer and a using method thereof. The method is applicable to the novel optoelectronic mixer as described in the foregoing solutions. The method includes: determining a first position combination and matching quantity of the protrusions 720 disposed on the male connector 7, as well as a second position combination and matching quantity of the grooves 800 arranged on the female connector 8; and mating the male connector 7 and the female connector 8 when the first position combination and matching quantity are consistent with the second position combination and matching quantity. If the positions and quantities of the protrusions 720 fail to correspond to those of the concave grooves 800, the male connector 7 and the female connector 8 cannot be mated.

The above descriptions merely set forth preferred embodiments of the present invention and are not intended to limit the scope thereof. Any modifications, equivalent replacements and improvements made within the spirit and principles of the present invention shall all fall within the protection scope of this invention.

## Claims

1. An in-vehicle optoelectronic mixer, **characterized by** comprising a male connector (1) and a mating female connector (2);
the male connector (1) includes a first housing sleeve (10), a first power transmission assembly (11), a first ferrule assembly (12), and a pair of male electrodes (13) respectively disposed on opposite sides of the first ferrule assembly (12); the first power transmission assembly (11) is located at a rear portion of the first ferrule assembly (12), and both the first power transmission assembly (11) and the first ferrule assembly (12) are accommodated within the first housing sleeve (10); the first power transmission assembly (11) includes a rotating housing (110) and an electrical terminal pair (111) fixed to the rotating housing (110); the electrical terminal pair (111) includes a positive electrical terminal and a negative electrical terminal; rear portions of the pair of male electrodes (13) respectively abut the positive electrical terminal and the negative electrical terminal to achieve electrical connection; when reversal of the positive and negative electrical terminals is required, the rotating housing (110) is rotated 180 degrees to reverse their positions; the male connector (1) mates with the female connector (2) via the first housing sleeve (10).

2. The in-vehicle optoelectronic mixer of claim 1, wherein the female connector (2) includes a second housing sleeve (20), a second ferrule assembly (21), and female electrodes (22) respectively disposed on opposite sides of the second ferrule assembly (21); the male connector (1) and the female connector (2) are fixedly connected via interlocking structures on the first housing sleeve (10) and the second housing sleeve (20); the first ferrule assembly (12) and the second ferrule assembly (21) abut for optical signal transmission; the female electrodes (22) abut the male electrodes (13) for electrical connection.

3. The in-vehicle optoelectronic mixer of claim 2, wherein the female connector (2) further includes a second power transmission assembly (23); the second power transmission assembly (23) includes a second electrical terminal (230); an end of the second electrical terminal (230) connected to a female electrode (22) is bent at a predetermined angle to form a stepped electrode structure with the female electrode (22);
the second housing sleeve (20) defines a first receiving groove (201) on a bottom surface thereof; the second electrical terminal (230) is fixed to a base of the second ferrule assembly (21), and a bent portion of the second electrical terminal (230) fits into the first receiving groove (201) at a rear portion of the second ferrule assembly (21), forming a dual-directional retaining structure for the second electrical terminal (230) when the second ferrule assembly (21) is fixed to the second housing sleeve (20).

4. The in-vehicle optoelectronic mixer of claim 3, wherein the second power transmission assembly (23) includes a columnar body (231) mated with the second ferrule assembly (21) and a positioning member (232) fixed to the columnar body (231); the positioning member (232) is configured to receive the second electrical terminal (230);
the positioning member (232) defines a rectangular notch (2321) for receiving the second electrical terminal (230), and a through window (2322) is defined at an end of the rectangular notch (2321) remote from the female electrode (22), providing a soldering area for a wire (3) and the second electrical terminal (230).

5. The in-vehicle optoelectronic mixer of claim 1, wherein an end of each male electrode (13) configured to mate with an end of the female electrode (22) is formed with a foolproof protrusion (130); the second housing sleeve (20) defines a first through slot (200) on an inner wall thereof corresponding to the protrusion (130);
the female electrode (22) is embedded at a bottom of the first through slot (200), and the protrusion (130) abuts against the female electrode (22) for electrical connection between the male electrode (13) and the female electrode (22).

6. The in-vehicle optoelectronic mixer of claim 5, wherein the first housing sleeve (10) defines a second notch (102) on a side surface thereof, and the protrusion (130) is snap-fitted into the second notch (102).

7. The in-vehicle optoelectronic mixer of claim 1, wherein the male connector (1) and the female connector (2) are fixedly connected via interlocking structures on the first housing sleeve (10) and the second housing sleeve (20), comprising: a first notch (202) of a predetermined axial length defined on an upper surface of the second housing sleeve (20) proximate to a mating end of the female connector (2) and the male connector (1), the first notch (202) having a first locking head (2020);
a crossbar having a first locking opening (1000) and a pressing portion (1001) connected to an upper surface of the first housing sleeve (10) via a support rod (100), the first locking opening (1000) and the pressing portion (1001) disposed on opposite sides of the support rod (100);
the first locking head (2020) and the first locking opening (1000) are locked to each other when the female connector (2) mates with the male connector (1), and the first notch (202) receives a portion of the crossbar above the first housing sleeve (10).

8. The in-vehicle optoelectronic mixer of claim 7, wherein a limiting portion (203) in a form of a boss is further disposed on the female connector (2) in an axial extension direction of the first locking head (2020) on the first notch (202); a long concave groove (1002) is defined on the crossbar having the first locking opening (1000) on the male connector (1);
the long concave groove (1002) fits over the limiting portion (203) when the first locking head (2020) engages the first locking opening (1000).

9. The in-vehicle optoelectronic mixer of claim 7, wherein the first notch (202) defines a first cutout (204) proximate to the mating end of the female connector (2), a width of the first cutout (204) matching a width of the support rod (100), and a length of the first cutout (204) accommodating axial entry of the support rod (100) into the mating end of the female connector (2) during mating of the male connector (1) and the female connector (2).

10. The in-vehicle optoelectronic mixer of claim 7, wherein the first housing sleeve (10) defines a second receiving groove (101) extending inward on a side surface thereof; a locking tab (1003) is disposed at a bottom of the support rod (100), and the locking tab (1003) snap-fits into the second receiving groove (101) to secure the support rod (100) to the first housing sleeve (10).

11. The in-vehicle optoelectronic mixer of claim 10, wherein the locking tab (1003) includes at least one locking tab, each defining a through-hole (1004) selected from an elliptical through-hole and a rectangular through-hole extending through opposite side surfaces of the locking tab (1003);
a maximum height of the locking tab (1003) is greater than a height of the second receiving groove (101), with a predetermined height difference.

12. The in-vehicle optoelectronic mixer of claim 7, wherein the support rod (100) is made of rigid plastic, and crossbars on opposite sides of the support rod (100) form a seesaw mechanism for engagement and disengagement of the first locking head (2020) and the first locking opening (1000); or the support rod (100) is made of moderately rigid elastic plastic, and the pressing portion (1001) on one side of the support rod (100) is pressed to disengage the first locking head (2020) and the first locking opening (1000).

13. The in-vehicle optoelectronic mixer of claim 1, wherein the rotating housing (110) defines a plurality of locking protrusions (1100) on a surface thereof, and the first housing sleeve (10) defines a plurality of locking grooves (103) inside corresponding to the locking protrusions (1100).

14. The in-vehicle optoelectronic mixer of claim 13, wherein the locking protrusions (1100) are circular protrusions, and the locking grooves (103) are circular grooves.

15. The in-vehicle optoelectronic mixer of claim 1, wherein electrode markings (1101) are disposed on a surface of the rotating housing (110) corresponding to the electrical terminal pair (111).

16. The in-vehicle optoelectronic mixer of claim 15, wherein the electrode markings (1101) are disposed at a bottom of the rotating housing (110), with a "+" marking at a position corresponding to the positive electrical terminal and a "-" marking at a position corresponding to the negative electrical terminal.

17. The in-vehicle optoelectronic mixer of any one of claims 1-16, wherein a semicircular protrusion is defined at a center of the electrical terminal pair (111), and an abutting surface of the male electrode (13) against the electrical terminal pair (111) is flat.

18. The in-vehicle optoelectronic mixer of any one of claims 1-16, wherein a short cylindrical rotating portion (120) is defined at a portion of a housing of the first ferrule assembly (12) abutting against the rotating housing (110), and a diameter of the rotating portion (120) is slightly smaller than a distance between the positive electrical terminal and the negative electrical terminal.

19. A method for using an in-vehicle optoelectronic mixer, applicable to the in-vehicle optoelectronic mixer of any one of claims 1-18, **characterized by** comprising determining whether electrode reversal is required based on an installation environment of an optoelectronic hybrid connector, and rotating the rotating housing (110) from a first position to a second position to complete electrode reversal if reversal is required.

20. The method of claim 19, wherein the second position is a position of the rotating housing (110) after rotating 180 degrees clockwise or counterclockwise from the first position.

21. An in-vehicle optoelectronic mixer, **characterized by** comprising a male connector (4) and a mating female connector (5);
the male connector (4) includes a first housing sleeve (40), a first power transmission assembly (41), and a first ferrule assembly (42); the first ferrule assembly (42) is disposed at a central axis of the first power transmission assembly (41), which is snap-fitted inside the first housing sleeve (40); a support rod (400) is disposed on an upper surface of the first housing sleeve (40); a locking tab (4002) is disposed at a bottom of the support rod (400); the first housing sleeve (40) defines locking grooves (401) corresponding to the locking tab (4002); the locking grooves (401) extend inward from side surfaces of the first housing sleeve (40) and are symmetrically disposed on upper and lower surfaces thereof.

22. The in-vehicle optoelectronic mixer of claim 21, wherein the female connector (5) includes a second housing sleeve (50), a second power transmission assembly (51), and a second ferrule assembly (52); the second ferrule assembly (52) is disposed at a central axis of the second power transmission assembly (51); a first notch (500) of a predetermined axial length is defined on an upper surface of the second housing sleeve (50) proximate to a mating end of the female connector (5) and the male connector (4), the first notch (500) having a first locking head (5000);
the support rod (400) has a first locking opening (4000) and a pressing portion (4001) disposed on opposite sides thereof;
the first locking head (5000) and the first locking opening (4000) are locked to each other when the female connector (5) mates with the male connector (4), and the first notch (500) receives a portion of a crossbar above the male connector (4).

23. The in-vehicle optoelectronic mixer of claim 22, wherein the support rod (400) is made of rigid plastic, and crossbars on opposite sides of the support rod (400) form a seesaw mechanism for engagement and disengagement of the first locking head (5000) and the first locking opening (4000); or the support rod (400) is made of moderately rigid elastic plastic, and the pressing portion (4001) on one side of the support rod (400) is pressed to disengage the first locking head (5000) and the first locking opening (4000).

24. The in-vehicle optoelectronic mixer of claim 21, wherein the first power transmission assembly (41) includes a male electrode (410), and the second power transmission assembly (51) of the female connector (5) includes a female electrode (510); the male electrode (410) abuts against the female electrode (510) for electrical connection between the male connector (4) and the female connector (5).

25. The in-vehicle optoelectronic mixer of claim 24, wherein the second power transmission assembly (51) includes a columnar body (511) mated with the second ferrule assembly (52) of the female connector (5) and a positioning member (512) fixed to the columnar body (511); the positioning member (512) is configured to receive the female electrode (510);
the positioning member (512) defines a rectangular notch (5120) for receiving the female electrode (510), and a through window (5121) is defined at an end of the rectangular notch (5120) remote from a mating end, providing a soldering area for a wire (6) and the female electrode (510).

26. The in-vehicle optoelectronic mixer of claim 24, wherein an end of the male electrode (410) configured to mate with the female electrode (510) is formed with a foolproof protrusion (4100); the second housing sleeve (50) of the female connector (5) defines a first through slot (501) on an inner wall thereof corresponding to the protrusion (4100);
the female electrode (510) is embedded at a bottom of the first through slot (501), and the protrusion (4100) abuts against the female electrode (510) for electrical connection between the male electrode (410) and the female electrode (510).

27. The in-vehicle optoelectronic mixer of claim 26, wherein the first housing sleeve (40) defines a second notch (403) on a side surface thereof, and the protrusion (4100) is snap-fitted into the second notch (403).

28. The in-vehicle optoelectronic mixer of claim 25, wherein the male electrode (410) includes a positive electrical terminal and a negative electrical terminal disposed on left and right sides of the first ferrule assembly (42), with a wire (6) connected to a rear portion of the male electrode (410) for power supply.

29. The in-vehicle optoelectronic mixer of claim 22, wherein a first limiting portion (503) in a form of a boss is further disposed on the female connector (5) in an axial extension direction of the first locking head (5000) on the first notch (500); a long concave groove (4003) is defined on the crossbar having the first locking opening (4000) on the male connector (4);
the long concave groove (4003) fits over the first limiting portion (503) when the first locking head (5000) is locked with the first locking opening (4000).

30. The in-vehicle optoelectronic mixer of claim 29, wherein the first notch (500) defines a first cutout (502) proximate to the mating end of the female connector (5), a width of the first cutout (502) matching a width of the support rod (400), and a length of the first cutout (502) accommodating axial entry of the support rod (400) into the mating end of the female connector (5) during mating of the male connector (4) and the female connector (5).

31. The in-vehicle optoelectronic mixer of claim 21, wherein the first power transmission assembly (41) includes a cylindrical base (411) and a square base (4110) formed on the cylindrical base (411), a cross-sectional area of the cylindrical base (411) being larger than that of the square base (4110);
a second locking head (4111) is defined on a side surface of the square base (4110), and the first housing sleeve 40 defines a second locking opening (404) on a side surface thereof corresponding to the second locking head (4111); the second locking head (4111) and the second locking opening (404) interlock when the male connector (4) mates with the female connector (5).

32. The in-vehicle optoelectronic mixer of claim 21, wherein the cylindrical base (411) defines electrode markings (4112) corresponding to a position of the male electrode (410) of the first power transmission assembly (41).

33. The in-vehicle optoelectronic mixer of claim 32, wherein the electrode markings (4112) are disposed on a rear surface of the cylindrical base (411), with a "+" marking at a position corresponding to the positive electrical terminal and a "-" marking at a position corresponding to the negative electrical terminal.

34. The in-vehicle optoelectronic mixer of claim 21, wherein the male connector (4) further includes a spring (43); the first ferrule assembly (42) defines a limiting block (420); the first housing sleeve (40) defines a ferrule guide groove (402); the square base (4110) of the first power transmission assembly (41) defines a first limiting groove (4113); the spring (43) abuts against the limiting block (420) and a bottom of the first limiting groove (4113); the spring (43) is compressed and the limiting block (420) abuts against a bottom of the ferrule guide groove (402) when the male connector (4) mates with the female connector (5).

35. The in-vehicle optoelectronic mixer of any one of claims 21-34, wherein the locking tab (4002) includes at least one locking tab, each defining a through-hole (4004) selected from an elliptical through-hole and a rectangular through-hole extending through opposite side surfaces of the locking tab (4002);
a maximum height of the locking tab (4002) is greater than a height of the locking groove (401), with a predetermined height difference.

36. A method for using an in-vehicle optoelectronic mixer, applicable to the in-vehicle optoelectronic mixer of any one of claims 21-35, **characterized by** comprising determining whether electrode reversal is required based on an installation environment of an optoelectronic hybrid connector, removing the support rod (400) from a current locking groove (401) and reinserting it into a locking groove (401) on an opposite side of the first housing sleeve (40) to complete electrode reversal if reversal is required.

37. An in-vehicle optoelectronic mixer, **characterized by** comprising a male connector (7) and a female connector (8);
the male connector (7) includes a first housing sleeve (70), a first ferrule assembly (71), male electrodes (72), and a first power transmission assembly (73); the male electrodes (72) are disposed on at least one sidewall of the first power transmission assembly (73) that mates with the first housing sleeve (70); the first ferrule assembly (71) is fixed at a central axis of the first power transmission assembly (73); the first housing sleeve (70) is sleeved over and snap-fitted with the first power transmission assembly (73); an end of each male electrode (72) configured to mate with a female electrode (82) is formed with a foolproof protrusion (720), which extends beyond a corresponding through-hole in the first housing sleeve (70) by a predetermined distance, enabling both electrical connection with the female electrode (82) of the female connector (8) and foolproof mating between male and female connectors of different models.

38. The in-vehicle optoelectronic mixer of claim 37, wherein the female connector (8) includes a second housing sleeve (80), a second ferrule assembly (81), female electrodes (82), and a second power transmission assembly (83); the female electrodes (82) are disposed on an inner wall of the second housing sleeve (80) and embedded at a bottom of a concave groove (800) in the second housing sleeve (80); the second power transmission assembly (83) mates with the second ferrule assembly (81); second electrical terminals (830) are disposed on opposite sides of the second power transmission assembly (83);
end faces of the first ferrule assembly (71) and the second ferrule assembly (81) abut each other when the male connector (7) mates with the female connector (8), and the foolproof protrusion (720) abuts against an end of the female electrode (82) at a bottom of the concave groove.

39. The in-vehicle optoelectronic mixer of claim 37, wherein a first limiting portion (731) in a form of a boss is defined on a surface of the first power transmission assembly (73); the male electrode (72) is a concave structure with the protrusion (720) formed at ends of two sidewalls of the concave structure; the male electrode (72) is fitted over a sidewall of the first limiting portion (731), and a thickness of the first limiting portion (731) matches a thickness of the male electrode (72);
a first locking head (7310) for engaging the first housing sleeve (70) is defined on a surface of the first limiting portion (731) facing the first housing sleeve (70); when locked, an upper surface of the first limiting portion (731) abuts against an inner surface of the first housing sleeve (70), defining a vertical limiting space for the male electrode (72); the protrusion (720) extending beyond the through-hole defines a horizontal limiting space for the male electrode (72).

40. The in-vehicle optoelectronic mixer of claim 39, wherein the first power transmission assembly (73) includes a cylindrical base (732) and a square base (733) formed on the cylindrical base (732), a cross-sectional area of the cylindrical base (732) being larger than that of the square base (733); the first limiting portion (731) is defined on the square base (733);
a first electrical terminal (730) is disposed on the cylindrical base (732) facing the first limiting portion (731), and the first electrical terminal (730) abuts against a bottom of the concave male electrode (72) when the male electrode (72) is fitted over the first limiting portion (731).

41. The in-vehicle optoelectronic mixer of claim 38, wherein a concave groove (800) is defined axially on an inner wall of the second housing sleeve (80), one end of the concave groove (800) forming a foolproof groove, and the other end extending through the second ferrule assembly (81) at a central axis of the second housing sleeve (80) to communicate with the second power transmission assembly (83);
the female electrode (82) is received in the concave groove (800);
an end of the second electrical terminal (830) connected to the female electrode (82) is bent at a predetermined angle to form a stepped electrode structure with the female electrode (82);
the second electrical terminal (830) is fixed to a base of the second ferrule assembly (81), and a bent portion of the second electrical terminal (830) fits into a first receiving groove (801) at a rear portion of the second ferrule assembly (81), forming a dual-directional retaining structure for the second electrical terminal (830) when the second ferrule assembly (81) is fixed to the second housing sleeve (80).

42. The in-vehicle optoelectronic mixer of claim 41, wherein a first through slot (802) extending through the second housing sleeve (80) is defined at a bottom of the first receiving groove (801) for receiving a body of the second electrical terminal (830).

43. The in-vehicle optoelectronic mixer of claim 38, wherein the second electrical terminal (830) is embedded in a positioning member (832) of the second power transmission assembly (83); the positioning member (832) defines a rectangular notch (8320) for receiving the second electrical terminal (830), and a through window (8321) is defined at an end of the rectangular notch (8320) remote from a bent portion of the second electrical terminal (830), providing a soldering area for a wire (9) and the second electrical terminal (830), with a semicircular cutout defined on one side of the through window (8321) for receiving the wire (9).

44. The in-vehicle optoelectronic mixer of claim 38, wherein a coupling unit (806) is disposed at a center of the second housing sleeve (80) for coupling the first ferrule assembly (71) and the second ferrule assembly (81).

45. The in-vehicle optoelectronic mixer of claim 38, wherein an annular boss (808) and snap springs (809) for panel mounting are disposed at a rear portion of the second housing sleeve (80); a maximum height between two vertically opposed snap springs (809) is greater than a height of a mounting hole in the panel.

46. The in-vehicle optoelectronic mixer of claim 37, wherein interlocking structures are disclosed between the male connector (7) and the female connector (8), comprising:
a second notch (803) of a predetermined axial length defined on an upper surface of the second housing sleeve (80) proximate to a mating end of the female connector (8) and the male connector (7), the second notch (803) having a second locking head (8030);
a crossbar having a second locking opening (7010) and a pressing portion (7011) connected to an upper surface of the first housing sleeve (70) via a support rod (701), the second locking opening (7010) and the pressing portion (7011) disposed on opposite sides of the support rod (701);
the second locking head (8030) and the second locking opening (7010) are locked to each other when the female connector (8) mates with the male connector (7), and the second notch (803) receives a portion of the crossbar above the first housing sleeve (70).

47. The in-vehicle optoelectronic mixer of claim 46, wherein a second limiting portion (805) in a form of a boss is further disposed along an axial extension direction of the second locking head (8030) on the second notch (803); an elongated concave groove (7012) is defined on the crossbar having the second locking opening (7010) on the male connector (7);
the elongated concave groove (7012) fits over the second limiting portion (805) when the second locking head (8030) is locked to the second locking opening (7010).

48. The in-vehicle optoelectronic mixer of claim 46, wherein the second notch (803) defines a first cutout (804) proximate to the mating end of the female connector (8), a width of the first cutout (804) matching a width of the support rod (701), and a length of the first cutout (804) accommodating axial entry of the support rod (701) into the mating end of the female connector (8) during mating of the male connector (7) and the female connector (8).

49. The in-vehicle optoelectronic mixer of claim 46, wherein the first housing sleeve (70) defines a second receiving groove (702) extending inward on a side surface thereof; a locking tab (7013) is disposed at a bottom of the support rod (701), and the locking tab (7013) snap-fits into the second receiving groove (702) to secure the support rod (701) to the first housing sleeve (70).

50. The in-vehicle optoelectronic mixer of claim 49, wherein the locking tab (7013) includes at least one locking tab, each defining a through-hole (7014) selected from an elliptical through-hole and a rectangular through-hole extending through opposite side surfaces of the locking tab (7013);
a maximum height of the locking tab (7013) is greater than a height of the second receiving groove (702), with a predetermined height difference.

51. The in-vehicle optoelectronic mixer of claim 50, wherein the support rod (701) is made of rigid plastic, and crossbars on opposite sides of the support rod (701) form a seesaw mechanism for engagement and disengagement of the second locking head (8030) and the second locking opening (7010); or the support rod (701) is made of moderately rigid elastic plastic, and the pressing portion (7011) on one side of the support rod (701) is pressed to disengage the second locking head (8030) and the second locking opening (7010).

52. The in-vehicle optoelectronic mixer of any one of claims 37-51, wherein the first housing sleeve (70) defines a first notch (703) on a side surface thereof, and the protrusion (720) is snap-fitted into the first notch (703).

53. The in-vehicle optoelectronic mixer of any one of claims 37-51, wherein with reference to a square cross-section of the first housing sleeve (70), the protrusion (720) is arranged at a middle position of one or more sides of the square cross-section, and/or at one or more vertices of the square cross-section.

54. A method for using an in-vehicle optoelectronic mixer, applicable to the in-vehicle optoelectronic mixer of any one of claims 37-53, **characterized by** comprising determining a first position combination and matching quantity of the protrusions (720) on the male connector (7) and a second position combination and matching quantity of the grooves (800) on the female connector (8), and mating the male connector (7) and female connector (8) when the first position combination and quantity are consistent with the second position combination and quantity.
